# EUROPÄISCHE PATENTSCHRIFT

(11) **EP 1 144 548 B1**
(45) Veröffentlichungstag und Bekanntmachung des Hinweises auf die Patenterteilung: **25.08.2004**
(21) Anmeldenummer: 99968797.3
(22) Anmeldetag: 14.12.1999
(51) Int. Cl.: C09K 19/30, C09K 19/34, C09K 19/42

(54) **FLÜSSIGKRISTALLINES MEDIUM**
LIQUID CRYSTAL MEDIUM
MILIEU A CRISTAUX LIQUIDES

(30) Priorität: 22.12.1998 DE 19859421
(43) Veröffentlichungstag der Anmeldung: 17.10.2001
(73) Patentinhaber: MERCK PATENT GmbH, 64293 Darmstadt (DE)
(72) Erfinder: HECKMEIER, Michael, D-64625 Bensheim (DE); SCHULER, Brigitte, D-63808 Haibach (DE); TARUMI, Kazuaki, D-64342 Seeheim (DE); KIRSCH, Peer, D-64293 Darmstadt (DE); REIFFENRATH, Volker, D-64380 Rossdorf (DE)
(86) Internationale Anmeldenummer: PCT/EP1999/009919
(87) Internationale Veröffentlichungsnummer: WO 2000/037586

(56) Entgegenhaltungen:
- WO-A-90/12073
- WO-A-91/19772
- WO-A-92/02597
- WO-A-92/06148
- DE-A- 4 023 107
- DE-A- 4 123 389
- DE-A- 4 308 028
- DE-A- 19 707 154

## Beschreibung

Die vorliegende Erfindung betrifft ein flüssigkristallines Medium, sowie dessen Verwendung für elektrooptische Zwecke und dieses Medium enthaltende Anzeigen.

Flüssige Kristalle werden vor allem als Dielektrika in Anzeigevorrichtungen verwendet, da die optischen Eigenschaften solcher Substanzen durch eine angelegte Spannung beeinflußt werden können. Elektrooptische Vorrichtungen auf der Basis von Flüssigkristallen sind dem Fachmann bestens bekannt und können auf verschiedenen Effekten beruhen. Derartige Vorrichtungen sind beispielsweise Zellen mit dynamischer Streuung, DAP-Zellen (Deformation aufgerichteter Phasen), Gast/Wirt-Zellen, TN-Zellen mit verdrillt nematischer ("twisted nematic") Struktur, STN-Zellen ("supertwisted nematic"), SBE-Zellen ("superbirefringence effect") und OMI-Zellen ("optical mode interference"). Die gebräuchlichsten Anzeigevorrichtungen beruhen auf dem Schadt-Helfrich-Effekt und besitzen eine verdrillt nematische Struktur.

Die Flüssigkristallmaterialien müssen eine gute chemische und thermische Stabilität und eine gute Stabilität gegenüber elektrischen Feldern und elektromagnetischer Strahlung besitzen. Ferner sollten die Flüssigkristallmaterialien niedere Viskosität aufweisen und in den Zellen kurze Ansprechzeiten, tiefe Schwellenspannungen und einen hohen Kontrast ergeben.

Weiterhin sollten sie bei üblichen Betriebstemperaturen, d.h. in einem möglichst breiten Bereich unterhalb und oberhalb Raumtemperatur eine geeignete Mesophase besitzen, beispielsweise für die oben genannten Zellen eine nematische oder cholesterische Mesophase. Da Flüssigkristalle in der Regel als Mischungen mehrerer Komponenten zur Anwendung gelangen, ist es wichtig, daß die Komponenten untereinander gut mischbar sind. Weitere Eigenschaften, wie die elektrische Leitfähigkeit, die dielektrische Anisotropie und die optische Anisotropie, müssen je nach Zellentyp und Anwendungsgebiet unterschiedlichen Anforderungen genügen. Beispielsweise sollten Materialien für Zellen mit verdrillt nematischer Struktur eine positive dielektrische Anisotropie und eine geringe elektrische Leitfähigkeit aufweisen.

Beispielsweise sind für Matrix-Flüssigkristallanzeigen mit integrierten nichtlinearen Elementen zur Schaltung einzelner Bildpunkte (MFK-Anzeigen) Medien mit großer positiver dielektrischer Anisotropie, breiten nematischen Phasen, relativ niedriger Doppelbrechung, sehr hohem spezifischen Widerstand, guter UV- und Temperaturstabilität und geringem Dampfdruck erwünscht.

Derartige Matrix-Flüssigkristallanzeigen sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor) oder andere Dioden auf Silizium-Wafer als Substrat.
2. Dünnfilm-Transistoren (TFT) auf einer Glasplatte als Substrat.

Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet. Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, daß je ein Filterelement einem schaltbaren Bildelement gegenüber liegt.

Die TFT-Anzeigen arbeiten üblicherweise als TN-Zellen mit gekreuzten Polarisatoren in Transmission und sind von hinten beleuchtet.

Der Begriff MFK-Anzeigen umfaßt hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays für Rechneranwendungen (Laptop) und im Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige und es kann das Problem der "after image elimination" auftreten. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig, um akzeptable Standzeiten zu erhalten. Insbesondere bei low-volt-Mischungen war es bisher nicht möglich, sehr hohe spezifische Widerstände zu realisieren. Weiterhin ist es wichtig, daß der spezifische Widerstand eine möglichst geringe Zunahme bei steigender Temperatur sowie nach Temperatur- und/oder UV-Belastung zeigt. Besonders nachteilig sind auch die Tieftemperatureigenschaften der Mischungen aus dem Stand der Technik. Gefordert wird, daß auch bei tiefen Temperaturen keine Kristallisation und/oder smektische Phasen auftreten und die Temperaturabhängigkeit der Viskosität möglichst gering ist. Die MFK-Anzeigen aus dem Stand der Technik genügen somit nicht den heutigen Anforderungen.

Neben Flüssigkristallanzeigen, die eine Hintergrundbeleuchtung verwenden, also transmissiv und gegebenenfalls transflektiv betrieben werden, sind besonders auch reflektive Flüssigkristallanzeigen interessant. Diese reflektiven Flüssigkristallanzeigen benutzen das Umgebungslicht zur Informationsdarstellung. Somit verbrauchen sie wesentlich weniger Energie als hintergrundbeleuchtete Flüssigkristallanzeigen mit entsprechender Größe und Auflösung. Da der TN-Effekt durch einen sehr guten Kontrast gekennzeichnet ist, sind derartige reflektive Anzeigen auch bei hellen Umgebungsverhältnissen noch gut abzulesen. Dies ist bereits von einfachen reflektiven TN-Anzeigen, wie sie in z.B. Armbanduhren und Taschenrechnern verwendet werden, bekannt. Jedoch ist das Prinzip auch auf hochwertige, höher auflösende Aktiv-Matrix angesteuerte Anzeigen wie z.B. TFT-Displays anwendbar. Hier ist wie bereits bei den allgemeinen üblichen transmissiven TFT-TN-Anzeigen die Verwendung von Flüssigkristallen mit niedriger Doppelbrechung (Δn) nötig, um eine geringe optische Verzögerung (d· Δn) zu erreichen. Diese geringe optische Verzögerung führt zu einer meist akzeptablen geringen Blickwinkelabhängigkeit des Kontrastes (vgl. DE 30 22 818). Bei reflektiven Anzeigen ist die Verwendung von Flüssigkristallen mit kleiner Doppelbrechung noch wichtiger als bei transmissiven Anzeigen, da bei reflektiven Anzeigen die effektive Schichtdicke, die das Licht durchquert, ungefähr doppelt so groß ist wie bei transmissiven Anzeigen mit derselben Schichtdicke.

Vorteile von reflektiven Anzeigen gegenüber transmissiven Anzeigen sind neben dem geringeren Leistungsverbrauch (keine Hintergrundbeleuchtung nötig) die Platzersparnis, die zu einer sehr geringene Bautiefe führt und die Verminderung von Problemen durch Temperaturgradienten durch unterschiedliche Aufheizung durch die Hintergrundbeleuchtung.

Es besteht somit immer noch ein großer Bedarf nach MFK-Anzeigen mit sehr hohem spezifischen Widerstand bei gleichzeitig großem Arbeitstemperaturbereich, kurzen Schaltzeiten auch bei tiefen Temperaturen und niedriger Schwellenspannung, die diese Nachteile nicht oder nur in geringerem Maße zeigen.

Bei TN-(Schadt-Helfrich)-Zellen sind Medien erwünscht, die folgende Vorteile in den Zellen ermöglichen:
- erweiterter nematischer Phasenbereich (insbesondere zu tiefen Temperaturen)
- Schaltbarkeit bei extrem tiefen Temperaturen (out-door-use, Automobil, Avionik)
- erhöhte Beständigkeit gegenüber UV-Strahlung (längere Lebensdauer)
- niedrige Schwellen-(Ansteuer-)spannung
- niedrige Doppelbrechung für verbesserten Beobachtungswinkelbereich

Mit den aus dem Stand der Technik zur Verfügung stehenden Medien ist es nicht möglich, diese Vorteile unter gleichzeitigem Erhalt der übrigen Parameter zu realisieren.

Bei höher verdrillten Zellen (STN) sind Medien erwünscht, die eine höhere Multiplexierbarkeit und/oder kleinere Schwellenspannungen und/oder breitere nematische Phasenbereiche (insbesondere bei tiefen Temperaturen) ermöglichen. Hierzu ist eine weitere Ausdehnung des zur Verfügung stehenden Parameterraumes (Klärpunkt, Übergang smektisch-nematisch bzw. Schmelzpunkt, Viskosität, dielektrische Größen, elastische Größen) dringend erwünscht.

Der Erfindung liegt die Aufgabe zugrunde Medien für derartige MFK-, TNoder STN-Anzeigen, insbesondere für reflektive MFK-Anzeigen, bereitzustellen, die die oben angegebenen Nachteile nicht oder nur in geringerem Maße, und vorzugsweise gleichzeitig sehr hohe spezifische Widerstände, niedrige Schwellenspannungen sowie niedrige Doppelbrechungen aufweisen.

Aus den Offenbarungen der WO-A-91/19772, DE-A-41 23 389, WO-A-92/06148, WO-A-92/02597, DE-A-197 07 154, DE-A-40 23 107, WO-A-90/12073 und DE-A-43 08 028 sind flüssigkristalline Mischungen bekannt, die zum Teil eine oder mehrere Verbindungen der unten wiedergegebenen Formel I umfassen, jedoch alle eine optische Anisotropie von > 0,07 aufweisen.

Es wurde nun gefunden, daß diese Aufgabe gelöst werden kann, wenn man in Anzeigen erfindungsgemäße Medien verwendet.

Gegenstand der Erfindung ist somit ein flüssigkristallines Medium auf der Basis eines Gemisches von polaren Verbindungen mit positiver dielektrischer Anisotropie und einer optischen Anisotropie von ≤ 0,07, dadurch gekennzeichnet, daß es eine oder mehrere Verbindungen der allgemeinen Formel I 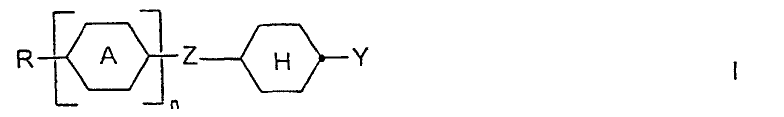 und eine oder mehrere Ester-Verbindungen der Formeln E1 bis E4 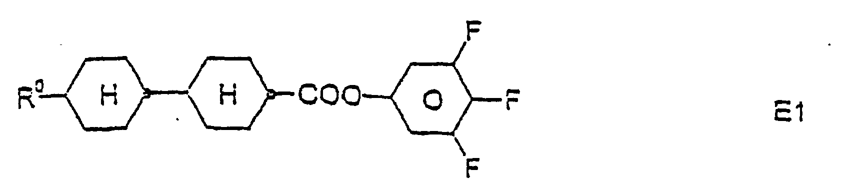 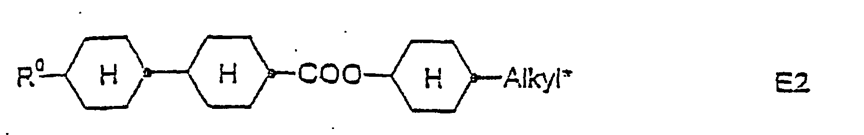 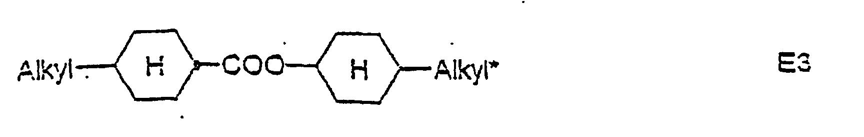 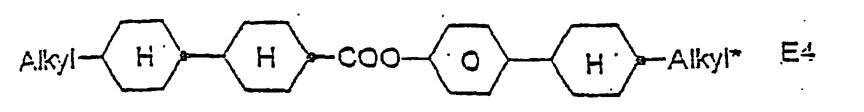 enthält,
worin
- R: H, einen unsubstituierten, einen einfach durch CN oder CF₃ oder einen mindestens einfach durch Halogen substituierten Alkyl- oder Alkenylrest mit 1 bis 15 C-Atomen, wobei in diesen Resten auch eine oder mehrere CH₂-Gruppen jeweils unabhängig voneinander durch -O-, -S-, 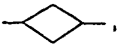 -CO-, -CO-O-, -O-CO- oder -O-CO-O- so ersetzt sein können, daß O-Atome nicht direkt miteinander verknüpft sind, 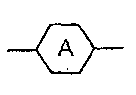
trans-1,4-Cyclohexylenring, worin auch ein oder zwei CH₂-Gruppen durch -O- und/oder -S- ersetzt sein können, oder einen Cyclohexenylenring,
- Y: halogeniertes Alkyl, halogeniertes Alkenyl, halogeniertes Alkoxy oder halogeniertes Alkenyloxy mit bis zu 6 C-Atomen,
- Z: -CH₂O-, -OCH₂-, -CH₂CH₂-, -CH=CH-, -CF₂O-, -OCF₂-, - COO-, -C₂F₄- oder eine Einfachbindung, und
- n: 1 oder 2
- R⁰: n-Alkyl, Oxaalkyl, Fluoralkyl oder Alkenyl mit jeweils bis zu 7 C-Atomen,
- Alkyl: geradkettige und verzweigte Alkylketten mit 1 bis 7 C-Atomen,
- Alkyl*: geradkettige und verzweigte Alkylketten mit 1 bis 7 C-Atomen
bedeuten.

Die Verbindungen der Formel I besitzen einen breiten Anwendungsbereich. In Abhängigkeit von der Auswahl der Substituenten können diese Verbindungen als Basismaterialien dienen, aus denen flüssigkristalline Medien zum überwiegenden Teil zusammengesetzt sind; es können aber auch Verbindungen der Formel I flüssigkristallinen Basismaterialien aus anderen Verbindungsklassen zugesetzt werden, um beispielsweise die dielektrische und/oder optische Anisotropie eines solchen Dielektrikums zu beeinflussen und/oder um dessen Schwellenspannung und/oder dessen Viskosität zu optimieren.

Die Verbindungen der Formel I sind in reinem Zustand farblos und bilden flüssigkristalline Mesophasen in einem für die elektrooptische Verwendung günstig gelegenen Temperaturbereich. Chemisch, thermisch und gegen Licht sind sie stabil.

In den erfindungsgemäßen Medien enthaltend Verbindungen der Formel 1 ist Y vorzugsweise OCF₃, OCHF₂, CF₃, CHFCF₃, CF₂CHF₂, CF₂Cl, OCF₂Cl, C₂H₄CHF₂, CF₂CHFCF₃, CF₂CH₂CF₃, CHF₂, OCH₂CF₃, OCH₂CHF₂, OCF₂CHF₂, O(CH₂)₃CF₃, OCH₂C₂F₅, OCH₂CF₂CHF₂, OCH₂C₃F₇, OCHFCF₃, OC₂F₅, OCF₂CHFCF₃, OCH=CF₂, OCF=CF₂, OCF=CFCF₃, OCF=CF-C₂F₅, CH=CHF, CH=CF₂, CF=CF₂, CF₂OCF₃, insbesondere OCF₃ und CF₃.

Insbesondere bevorzugt sind Verbindungen der Formel I, worin Ring A ein trans-1,4-Cyclohexanring oder ein Dioxanring ist.

Falls R einen Alkylrest und/oder einen Alkoxyrest bedeutet, so kann dieser geradkettig oder verzweigt sein. Vorzugsweise ist er geradkettig, hat 2, 3, 4, 5, 6 oder 7 C-Atome und bedeutet demnach bevorzugt Ethyl, Propyl, Butyl, Pentyl, Hexyl, Heptyl, Ethoxy, Propoxy, Butoxy, Pentoxy, Hexoxy oder Heptoxy, ferner Methyl, Octyl, Nonyl, Decyl, Undecyl, Dodecyl, Tridecyl, Tetradecyl, Pentadecyl, Methoxy, Octoxy, Nonoxy, Decoxy, Undecoxy, Dodecoxy, Tridecoxy oder Tetradecoxy.

Oxaalkyl bedeutet vorzugsweise geradkettiges 2-Oxapropyl (= Methoxymethyl), 2- (= Ethoxymethyl) oder 3-Oxabutyl (= 2-Methoxyethyl), 2-, 3-oder 4-Oxapentyl, 2-, 3-, 4- oder 5-Oxahexyl, 2-, 3-, 4-, 5- oder 6-Oxaheptyl, 2-, 3-, 4-, 5-, 6- oder 7-Oxaoctyl, 2-, 3-, 4-, 5-, 6-, 7- oder 8-Oxanonyl, 2-, 3-, 4-, 5-, 6-, 7-, 8- oder 9-Oxadecyl.

Falls R einen Alkylrest bedeutet, in dem eine CH₂-Gruppe durch -CH=CHersetzt ist, so kann dieser geradkettig oder verzweigt sein. Vorzugsweise ist er geradkettig und hat 2 bis 10 C-Atome. Er bedeutet demnach besonders Vinyl, Prop-1-, oder Prop-2-enyl, But-1-, 2- oder But-3-enyl, Pent-1-, 2-, 3- oder Pent-4-enyl, Hex-1-, 2-, 3-, 4- oder Hex-5-enyl, Hept-1-, 2-, 3-, 4-, 5- oder Hept-6-enyl, Oct-1-, 2-, 3-, 4-, 5-, 6- oder Oct-7-enyl, Non-1-, 2-, 3-, 4-, 5-, 6-, 7- oder Non-8-enyl, Dec-1-, 2-, 3-, 4-, 5-, 6-, 7-, 8- oder Dec-9-enyl.

Falls R einen Alkylrest bedeutet, in dem eine CH₂-Gruppe durch -O- und eine durch -CO- ersetzt ist, so sind diese bevorzugt benachbart. Somit beinhalten diese eine Acyloxygruppe -CO-O- oder eine Oxycarbonylgruppe -O-CO-. Vorzugsweise sind diese geradkettig und haben 2 bis 6 C-Atome.

Sie bedeuten demnach besonders Acetyloxy, Propionyloxy, Butyryloxy, Pentanoyloxy, Hexanoyloxy, Acetyloxymethyl, Propionyloxymethyl, Butyryloxymethyl, Pentanoyloxymethyl, 2-Acetyloxyethyl, 2-Propionyloxyethyl, 2-Butyryloxyethyl, 3-Acetyloxypropyl, 3-Propionyloxypropyl, 4-Acetyloxybutyl, Methoxycarbonyl, Ethoxycarbonyl, Propoxycarbonyl, Butoxycarbonyl, Pentoxycarbonyl, Methoxycarbonylmethyl, Ethoxycarbonylmethyl, Propoxycarbonylmethyl, Butoxycarbonylmethyl, 2-(Methoxycarbonyl)ethyl, 2-(Ethoxycarbonyl)ethyl, 2-(Propoxycarbonyl)ethyl, 3-(Methoxycarbonyl)propyl, 3-(Ethoxycarbonyl)propyl, 4-(Methoxycarbonyl)-butyl.

Falls R einen Alkylrest bedeutet, in dem eine CH₂-Gruppe durch unsubstituiertes oder substituiertes -CH=CH- und eine benachbarte CH₂-Gruppe durch CO oder CO-O oder O-CO ersetzt ist, so kann dieser geradkettig oder verzweigt sein. Vorzugsweise ist er geradkettig und hat 4 bis 13 C-Atome. Er bedeutet demnach besonders Acryloyloxymethyl, 2-Acryloyloxyethyl, 3-Acryloyloxypropyl, 4-Acryloyloxybutyl, 5-Acryloyloxypentyl, 6-Acryloyloxyhexyl, 7-Acryloyloxyheptyl, 8-Acryloyloxyoctyl, 9-Acryloyloxynonyl, 10-Acryloyloxydecyl, Methacryloyloxymethyl, 2-Methacryloyloxyethyl, 3-Methacryloyloxypropyl, 4-Methacryloyloxybutyl, 5-Methacryloyl-oxypentyl, 6-Methacryloyloxyhexyl, 7-Methacryloyloxyheptyl, 8-Methacryloyloxyoctyl, 9-Methacryloyloxynonyl.

Falls R einen einfach durch CN oder CF₃ substituierten Alkyl- oder Alkenylrest bedeutet, so ist dieser Rest vorzugsweise geradkettig. Die Substitution durch CN oder CF₃ ist in beliebiger Position.

Falls R einen mindestens einfach durch Halogen substituierten Alkyl- oder Alkenylrest bedeutet, so ist dieser Rest vorzugsweise geradkettig und Halogen ist vorzugsweise F oder Cl. Bei Mehrfachsubstitution ist Halogen vorzugsweise F. Die resultierenden Reste schließen auch perfluorierte Reste ein. Bei Einfachsubstitution kann der Fluor- oder Chlorsubstituent in beliebiger Position sein, vorzugsweise jedoch in ω-Position.

Verbindungen der Formel I, die über für Polymerisationsreaktionen geeignete Flügelgruppen R verfügen, eignen sich zur Darstellung flüssigkristalliner Polymerer.

Verbindungen der Formel I mit verzweigten Flügelgruppen R können gelegentlich wegen einer besseren Löslichkeit in den üblichen flüssigkristallinen Basismaterialien von Bedeutung sein, insbesondere aber als chirale Dotierstoffe, wenn sie optisch aktiv sind. Smektische Verbindungen dieser Art eignen sich als Komponenten für ferroelektrische Materialien.

Verbindungen der Formel I mit S_{A}-Phasen eignen sich beispielsweise für thermisch adressierte Displays.

Verzweigte Gruppen dieser Art enthalten in der Regel nicht mehr als eine Kettenverzweigung. Bevorzugte verzweigte Reste R sind Isopropyl, 2-Butyl (= 1-Methylpropyl), Isobutyl (= 2-Methylpropyl), 2-Methylbutyl, Isopentyl (= 3-Methylbutyl), 2-Methylpentyl, 3-Methylpentyl, 2-Ethylhexyl, 2-Propylpentyl, Isopropoxy, 2-Methylpropoxy, 2-Methylbutoxy, 3-Methylbutoxy, 2-Methylpentoxy, 3-Methylpentoxy, 2-Ethylhexoxy, 1-Methylhexoxy, 1-Methylheptoxy.

Falls R einen Alkylrest darstellt, in dem zwei oder mehr CH₂-Gruppen durch -O- und/oder -CO-O- ersetzt sind, so kann dieser geradkettig oder verzweigt sein. Vorzugsweise ist er verzweigt und hat 3 bis 12 C-Atome. Er bedeutet demnach besonders Bis-carboxy-methyl, 2,2-Bis-carboxy-ethyl, 3,3-Bis-carboxy-propyl, 4,4-Bis-carboxy-butyl, 5,5-Bis-carboxy-pentyl, 6,6-Bis-carboxy-hexyl, 7,7-Bis-carboxy-heptyl, 8,8-Bis-carboxy-octyl, 9,9-Bis-carboxy-nonyl, 10,10-Bis-carboxy-decyl, Bis-(methoxycarbonyl)-methyl, 2,2-Bis-(methoxycarbonyl)-ethyl, 3,3-Bis-(methoxycarbonyl)-propyl, 4,4-Bis-(methoxycarbonyl)-butyl, 5,5-Bis-(methoxycarbonyl)-pentyl, 6,6-Bis-(methoxycarbonyl)-hexyl, 7,7-Bis-(methoxycarbonyl)-heptyl, 8,8-Bis-(methoxycarbonyl)-octyl, Bis-(ethoxycarbonyl)-methyl, 2,2-Bis-(ethoxycarbonyl)-ethyl, 3,3-Bis-(ethoxycarbonyl)-propyl, 4,4-Bis-(ethoxycarbonyl)-butyl, 5,5-Bis-(ethoxycarbonyl)-hexyl.

Z bedeutet vorzugsweise eine Einfachbindung, -COO- oder eine -CH₂CH₂-Brücke.

Die Verbindungen der Formel I werden nach an sich bekannten Methoden dargestellt, wie sie in der Literatur (z.B. in den Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen. Weiterhin können die Verbindungen der Formel 1, wie in den Patentanmeldungen DE 40 23 107 A1 und EP 0 418 362 A1 beschrieben, hergestellt werden.

Gegenstand der Erfindung sind auch elektrooptische Anzeigen (insbesondere STN- oder MFK-Anzeigen mit zwei planparallelen Trägerplatten, die mit einer Umrandung eine Zelle bilden, integrierten nicht-linearen Elementen zur Schaltung einzelner Bildpunkte auf den Trägerplatten und einer in der Zelle befindlichen nematischen Flüssigkristallmischung mit positiver dielektrischer Anisotropie und hohem spezifischem Widerstand), die derartige Medien enthalten sowie die Verwendung dieser Medien für elektrooptische Zwecke.

Die erfindungsgemäßen Flüssigkristallmischungen ermöglichen eine bedeutende Erweiterung des zur Verfügung stehenden Parameterraumes.

Die erzielbaren Kombinationen aus Klärpunkt, Viskosität bei tiefer Temperatur, thermischer und UV-Stabilität und optischer Anisotropie und Schwellenspannung übertreffen bei weitem bisherige Materialien aus dem Stand der Technik.

Die Forderung nach hohem Klärpunkt, nematischer Phase bei tiefer Temperatur sowie einer niedrigen Doppelbrechung (Δn) und gleichzeitig einer niedrigen Schwellenspannung konnte bislang nur inzureichend erfüllt werden. Flüssigkristallmischungen, wie z.B. MLC-6476 und MLC-6625 (Merck KGaA, Darmstadt, BRD) weisen zwar vergleichbare Klärpunkte und Tieftemperaturstabilitäten auf, sie haben jedoch sowohl viel höhere Δn-Werte von ca. 0,075 als auch viel höhere Schwellenspannungen von ca.≥1,7 V.

Die erfindungsgemäßen Flüssigkristallmischungen ermöglichen es unter Beibehaltung der nematischen Phase bis -20 °C und bevorzugt bis -30 °C, besonders bevorzugt bis -40 °C, Klärpunkte oberhalb 80 °C, vorzugsweise oberhalb 90 °C, besonders bevorzugt oberhalb 100 °C, gleichzeitig Doppelbrechungen von ≤ 0,07, insbesondere ≤ 0,065 und eine niedrige Schwellenspannung zu erreichen, wodurch hervorragende STN- und MFK-Anzeigen, insbesondere reflektive MFK-Anzeigen, erzielt werden können. Insbesondere sind die Mischungen durch kleine Operationsspannungen gekennzeichnet. Die TN-Schwellen liegen in der Regel bei 1,9 V, vorzugsweise unterhalb 1,7 V, besonders bevorzugt ≤ 1,5 V. Insbesondere reflektive MFK-Mischungen zeichnen sich durch TN-Schwellen von < 1,5 V aus.

Es versteht sich, daß durch geeignete Wahl der Komponenten der erfindungsgemäßen Mischungen auch höhere Klärpunkte (z.B. oberhalb 110°C) bei niedrigeren dielektrischen Anisotropiewerten und somit höheren Schwellenspannungen oder niedrigere Klärpunkte bei höheren dielektrischen Anisotropiewerten (z.B. > 12) und somit niedrigeren Schwellenspannungen (z.B. < 1,5 V) unter Erhalt der anderen vorteilhaften Eigenschaften realisiert werden können. Ebenso können bei entsprechend wenig erhöhten Viskositäten Mischungen mit größerem Δε und somit geringeren Schwellen erhalten werden. Die erfindungsgemäßen MFK-Anzeigen arbeiten vorzugsweise im ersten Transmissionsminimum nach Gooch und Tarry [C.H. Gooch und H.A. Tarry, Electron. Lett. 10, 2-4, 1974; C.H. Gooch und H.A. Tarry, Appl. Phys., Vol. 8, 1575-1584, 1975], wobei hier neben besonders günstigen elektrooptischen Eigenschaften wie z.B. hohe Steilheit der Kennlinie und geringe Winkelabhängigkeit des. Kontrastes (DE-PS 30 22 818) bei gleicher Schwellenspannung wie in einer analogen Anzeige im zweiten Minimum eine kleinere dielektrische Anisotropie ausreichend ist. Hierdurch lassen sich unter Verwendung der erfindungsgemäßen Mischungen im ersten Minimum deutlich höhere spezifische Widerstände verwirklichen als bei Mischungen mit Cyanverbindungen. Der Fachmann kann durch geeignete Wahl der einzelnen Komponenten und deren Gewichtsanteilen mit einfachen Routinemethoden die für eine vorgegebene Schichtdicke der MFK-Anzeige erforderliche Doppelbrechung einstellen. Die Anforderungen an reflektive MFK-Anzeigen wurden z.B. im Digest of Technical Papers, SID Symposium 1998 aufgezeigt.

Die Rotationsviskosität γ₁ bei 20 °C ist vorzugsweise < 150 mPa.s, besonders bevorzugt < 120 mPa.s. Der nematische Phasenbereich ist vorzugsweise mindestens 90°, insbesondere mindestens 100°. Vorzugsweise erstreckt sich dieser Bereich mindestens von -20° bis +80°.

Messungen des "Capacity Holding-Ratio" auch 'Voltage Holding Ratio" (HR) [S. Matsumoto et al., Liquid Crystals 5, 1320 (1989); K. Niwa et al., Proc. SID Conference, San Francisco, June 1984, p. 304 (1984); G. Weber et al., Liquid Crystals 5, 1381 (1989)] haben ergeben, daß erfindungsgemäße Mischungen enthaltend Verbindungen der Formel 1 eine ausreichende HR für MFK-Anzeigen aufweisen.

Vorzugsweise erhalten die erfindungsgemäßen Medien mehrere (vorzugsweise zwei, drei oder mehr) Verbindungen der Formel 1, d.h. der Anteil dieser Verbindungen ist 5-95 %, vorzugsweise 10-60 % und besonders bevorzugt im Bereich von 8-40 %.

Die einzelnen Verbindungen der Formeln I bis XV und deren Unterformeln, die in den erfindungsgemäßen Medien verwendet werden können, sind entweder bekannt, oder sie können analog zu den bekannten Verbindungen hergestellt werden.

Bevorzugte Ausführungsformen sind im folgenden angegeben:
- Mischung enthaltend ein oder mehrere Verbindungen der Formeln Ia bis In: 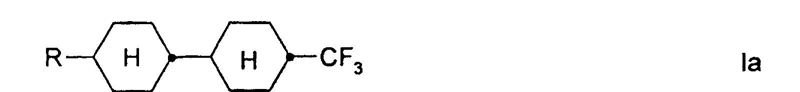 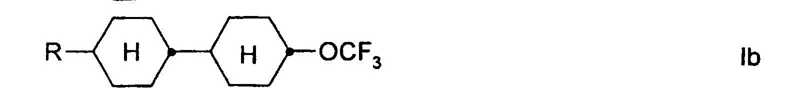 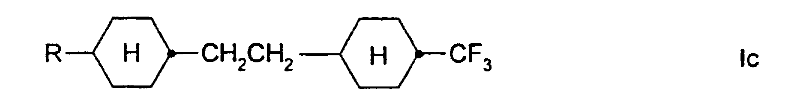 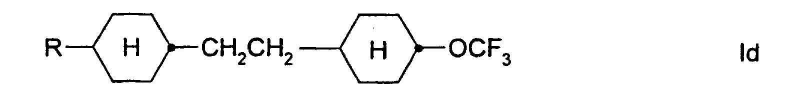 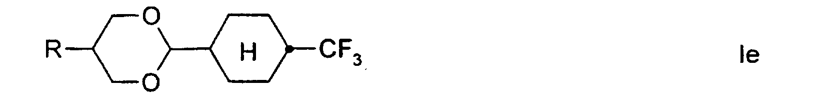 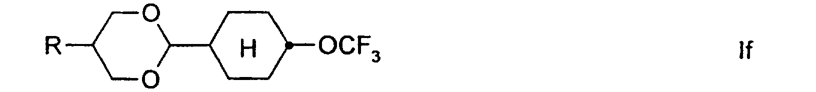 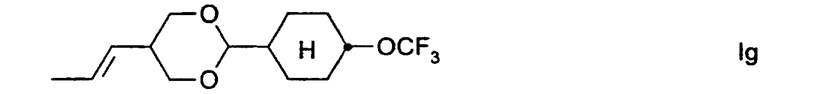 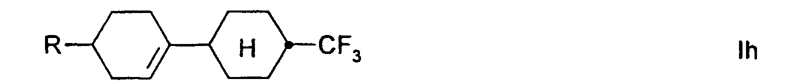 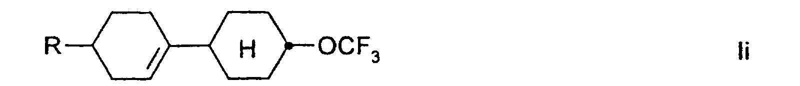 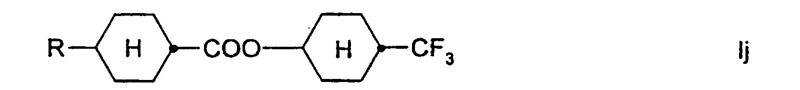 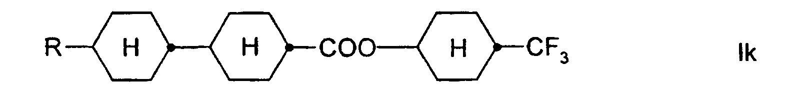 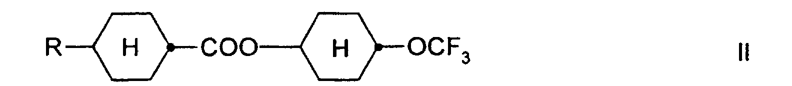 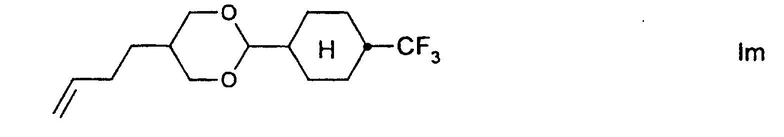 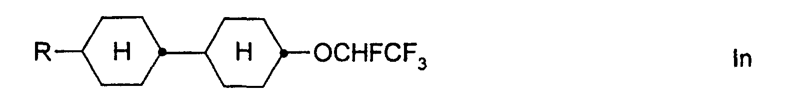 worin R die in Anspruch 1 angegebene Bedeutung besitzt, vorzugsweise jedoch ein geradkettiger Alkylrest ist;
- Das Medium enthält gleichzeitig ein oder mehrere Verbindungen der Formel Ib und der Formel Ie;
- Das Medium enthält gleichzeitig ein oder mehrere Verbindungen der Formel Ij und der Formel lk;
- Das Medium enthält zusätzlich eine oder mehrere Verbindungen ausgewählt aus der Gruppe bestehend aus den allgemeinen Formeln II bis VIII: 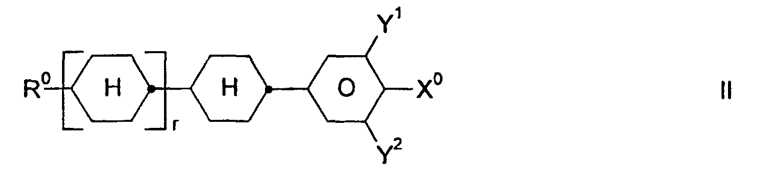 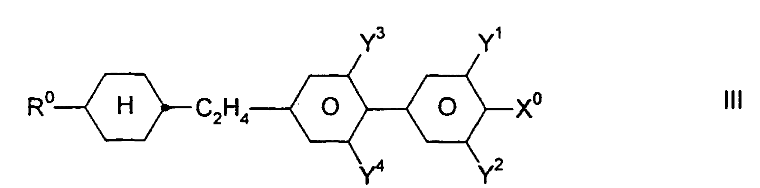 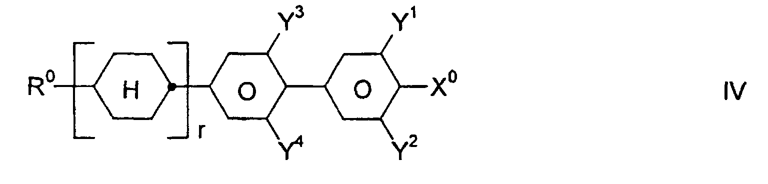 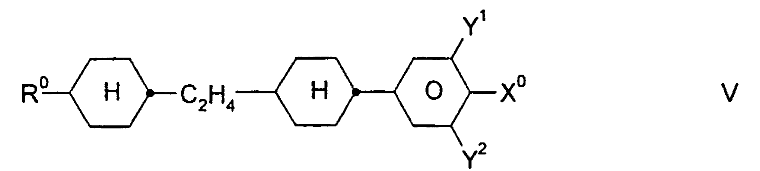 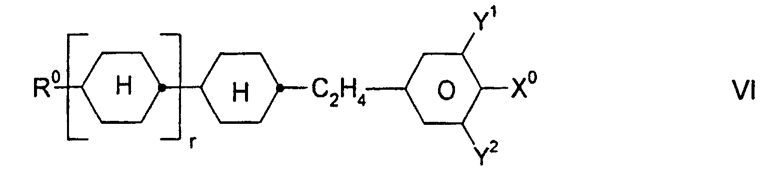 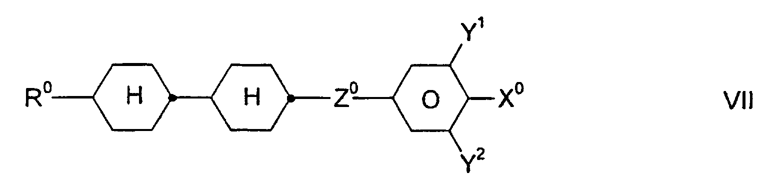 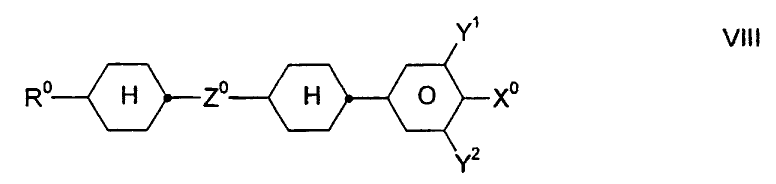
worin die einzelnen Reste die folgenden Bedeutungen haben:
- R⁰:: n-Alkyl, Oxaalkyl, Fluoralkyl oder Alkenyl mit jeweils bis zu 9 C-Atomen;
- X0:: F, Cl , halogeniertes Alkyl oder Alkoxy mit 1 bis 6 C-Atomen, oder halogeniertes Alkenyl mit 2 bis 6 C-Atomen;
- Z⁰:: -C₄H₈-, -CF₂O- -OCF₂-, -C₂F₄-, -CH₂O-, -OCH₂- oder -COO-;
- Y¹, Y², Y³ und Y⁴:: jeweils unabhängig voneinander H oder F;
- r:: 0 oder 1,

Die Verbindung der Formel IV ist vorzugsweise 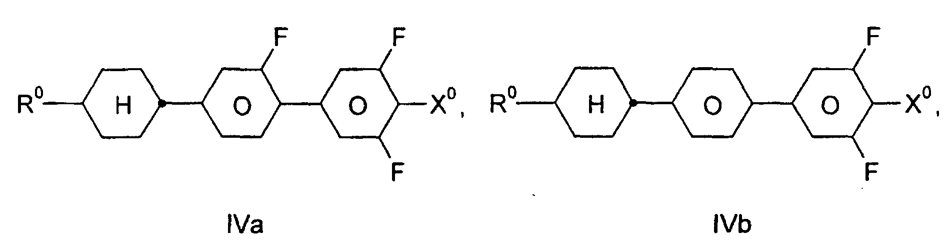 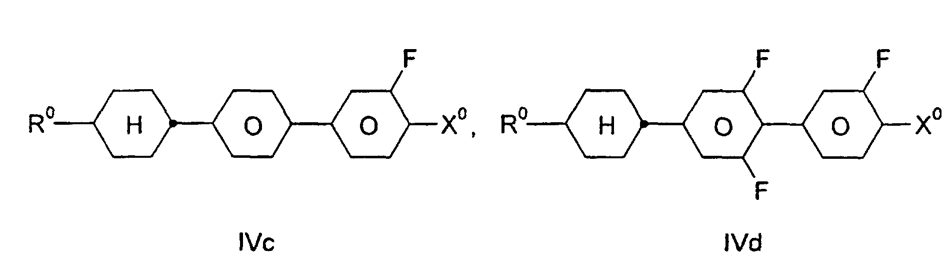 oder 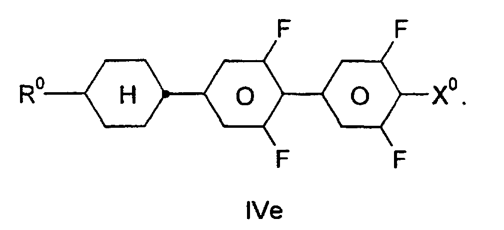
- Das Medium enthält zusätzlich eine oder mehrere Verbindungen ausgewählt aus der Gruppe bestehend aus den allgemeinen Formeln IX bis XV: 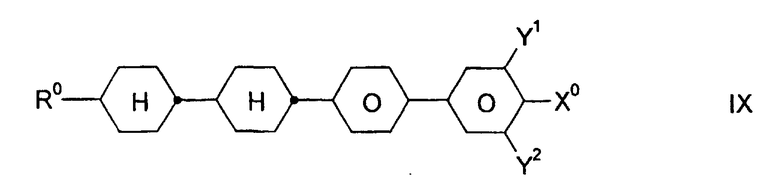 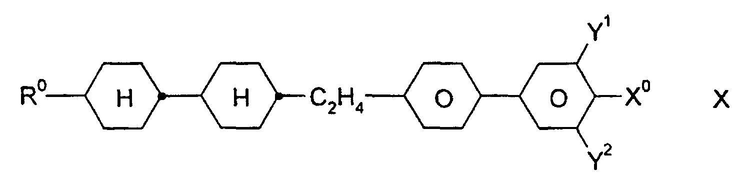 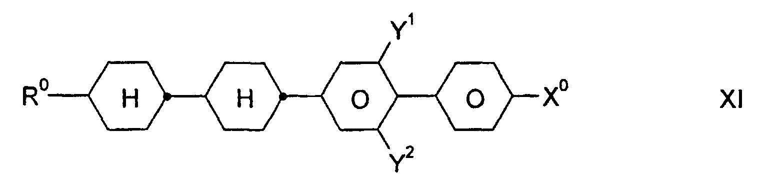 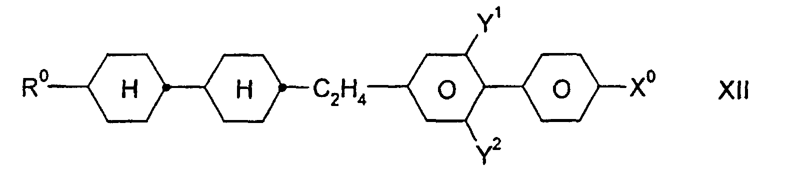 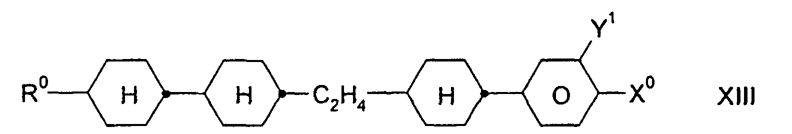 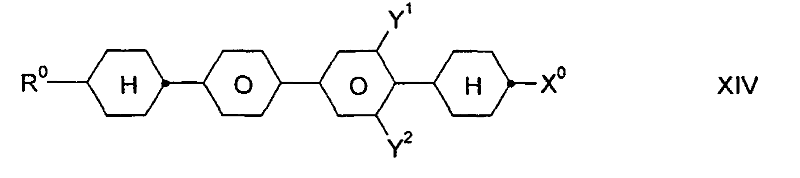 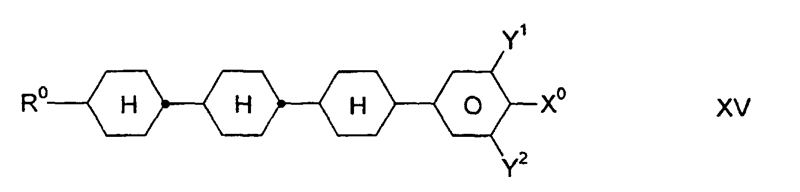 worin R⁰, X⁰, Y₁ und Y₂ jeweils unabhängig voneinander eine der in Anspruch 2 angegebene Bedeutung haben. Vorzugsweise bedeutet X⁰ F, Cl, CF₃, OCF₃, OCHF₂. R⁰ ist vorzugsweise Alkyl, Oxaalkyl, Fluoralkyl oder Alkenyl mit jeweils bis zu 6 C-Atomen.
- Das Medium enthält zusätzlich eine oder mehrere Verbindungen der Formel 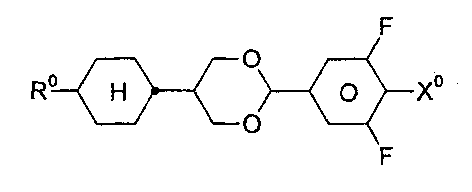 worin R⁰ und X⁰ die oben angegebenen Bedeutungen haben.
- Medium enthält zusätzlich ein oder mehrere Verbindungen der Formeln Xa bis Xd: 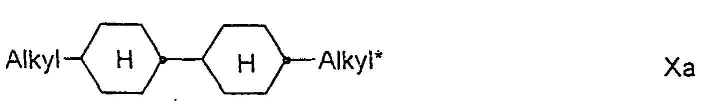 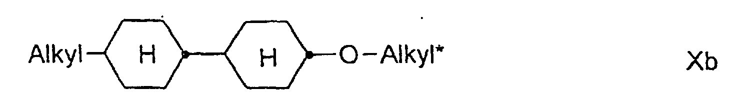 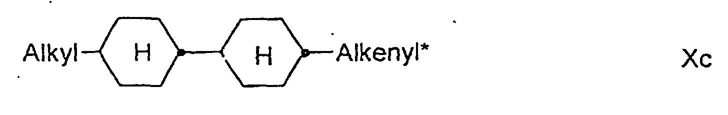 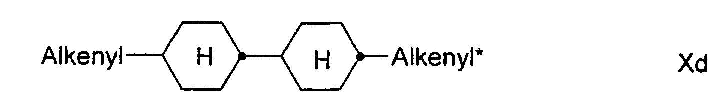
- Der Anteil an Verbindungen der Formeln I bis VIII zusammen beträgt im Gesamtgemisch mindestens 50 Gew.-%;
- Der Anteil an Verbindungen der Formel I beträgt im Gesamtgemisch 5 bis 50 Gew.-%;
- Der Anteil an Verbindungen der Formeln II bis VIII im Gesamtgemisch beträgt 20 bis 80 Gew.-% 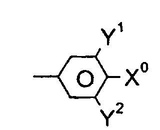 ist vorzugsweise 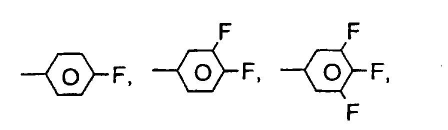 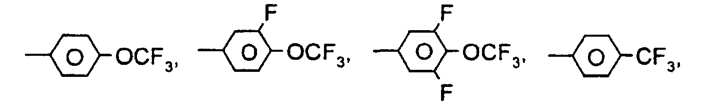 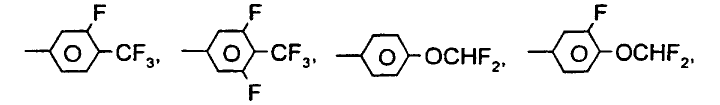 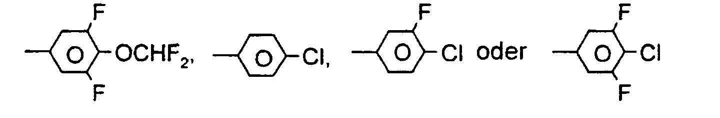
- Das Medium enthält Verbindungen der Formeln II, III, IV, V, VI, VII oder VIII;
- R⁰ ist geradkettiges Alkyl oder Alkenyl mit 2 bis 7 C-Atomen;
- Das Medium besteht im wesentlichen aus Verbindungen der Formeln I bis VIII;
- Das Medium enthält ein Gemisch aus Verbindungen der Formel I, worin Y CF₃ und/oder OCF₃ bedeutet;
- Das Medium enthält weitere Verbindungen, vorzugsweise ausgewählt aus der folgenden Gruppe bestehend aus den allgemeinen Formeln XVI bis XIX: 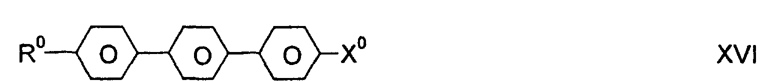 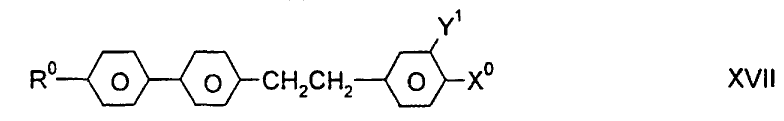 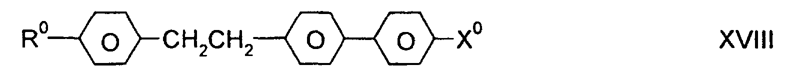 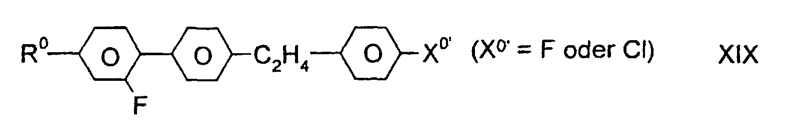 worin R⁰ und X⁰ die oben angegebene Bedeutung haben und die 1,4-Phenylenringe durch CN, Chlor oder Fluor substituiert sein können. Vorzugsweise sind die 1,4-Phenylenringe ein- oder mehrfach durch Fluoratome substituiert.
- Das Gewichtsverhältnis I: (II + III + IV + V + VI + VII + VIII) ist vorzugsweise 1 : 10 bis 10 : 1.
- Das Medium besteht im wesentlichen aus Verbindungen ausgewählt aus der Gruppe bestehend aus den allgemeinen Formeln I bis XV.
- Der Anteil an Verbindungen der Formeln Xa bis Xd beträgt im Gesamtgemisch 3-45 Gew.-%, vorzugsweise 5-40 Gew.-%, insbesondere 5-30 Gew.-%.
- Der Anteil der Verbindungen der Formel E1 beträgt im Gesamtgemisch 10-60 Gew.-%, vorzugsweise 10-45 Gew.-%, insbesondere 15-40 Gew.-%.
- Die Verbindung der Formel II ist vorzugsweise ausgewählt aus den Unterformeln IIa bis IId 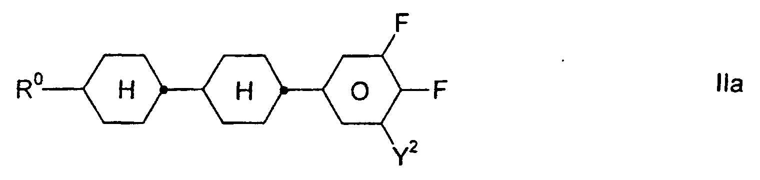 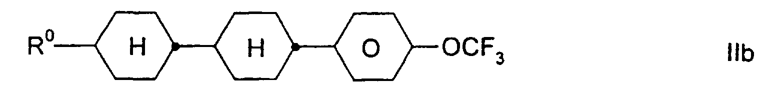 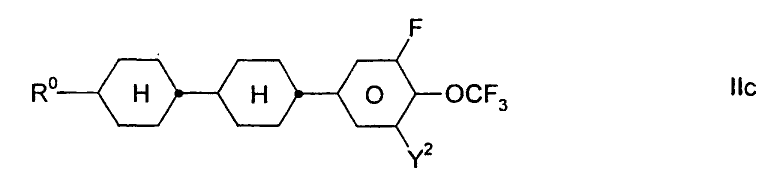 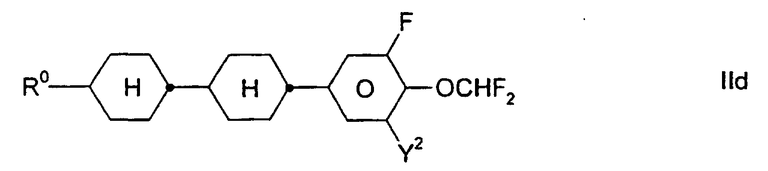
- Der Anteil der Verbindungen der Formeln E2 und/oder E3 im Gesamtgemisch beträgt 1-30 Gew.-%, vorzugsweise 3-20 Gew.-% und insbesondere 3-15 Gew.-%.
- Der Anteil der Verbindungen der Formel E4 ist vorzugsweise ≤ 20 Gew.-%, insbesondere ≤ 10 Gew.-%.

Es wurde gefunden, daß bereits ein relativ geringer Anteil an Verbindungen der Formel I im Gemisch mit üblichen Flüssigkristallmaterialien, insbesondere jedoch mit einer oder mehreren Verbindungen der Formel II, III, IV, V, VI, VII und/oder VIII zu einer beträchtlichen Erniedrigung der Schwellenspannung und zu niedrigen Werten für die Doppelbrechung führt, wobei gleichzeitig breite nematische Phasen mit tiefen Übergangstemperaturen smektisch-nematisch beobachtet werden, wodurch die Lagerstabilität verbessert wird. Bevorzugt sind insbesondere Mischungen, die neben ein oder mehrerer Verbindungen der Formel I ein oder mehrere Verbindungen der Formel IV enthalten, insbesondere Verbindungen der Formel IVa, worin X⁰ F oder OCF₃ bedeutet.

Die Verbindungen der Formeln I bis VIII sind farblos, stabil und untereinander und mit anderen Flüssigkristallmaterialien gut mischbar.

Der Ausdruck "Alkyl" bzw. "Alkyl^{*}" umfaßt geradkettige und verzweigte Alkylgruppen mit 1-7 Kohlenstoffatomen, insbesondere die geradkettigen Gruppen Methyl, Ethyl, Propyl, Butyl, Pentyl, Hexyl und Heptyl. Gruppen mit 2-5 Kohlenstoffatomen sind im allgemeinen bevorzugt.

Der Ausdruck "Alkenyl" bzw. "Alkenyl^{*}" umfaßt geradkettige und verzweigte Alkenylgruppen mit 2-7 Kohlenstoffatomen, insbesondere die geradket-tigen Gruppen. Besonders Alkenylgruppen sind C₂-C₇-1 E-Alkenyl, C₄-C₇-3E-Alkenyl, C₅-C₇-4-Alkenyl, C₆-C₇-5-Alkenyl und C₇-6-Alkenyl, insbesondere C₂-C₇-1 E-Alkenyl, C₄-C₇-3E-Alkenyl und C₅-C₇-4-Alkenyl. Beispiele bevorzugter Alkenylgruppen sind Vinyl, 1 E-Propenyl, 1E-Butenyl, 1E-Pentenyl, 1E-Hexenyl, 1E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Fluoralkyl" umfaßt vorzugsweise geradkettige Gruppen mit endständigen Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl" umfaßt vorzugsweise geradkettige Reste der Formel CₙH₂ₙ₊₁-O-(CH₂)ₘ, worin n und m jeweils unabhängig voneinander 1 bis 6 bedeuten. Vorzugsweise ist n = 1 und m 1 bis 6.

Durch geeignete Wahl der Bedeutungen von R⁰ und X⁰ können die Ansprechzeiten, die Schwellenspannung, die Steilheit der Transmissionskennlinien etc. in gewünschter Weise modifiziert werden. Beispielsweise führen 1 E-Alkenylreste, 3E-Alkenylreste, 2E-Alkenyloxyreste und dergleichen in der Regel zu kürzeren Ansprechzeiten, verbesserten nematischen Tendenzen und einem höheren Verhältnis der elastischen Konstanten k₃₃ (bend) und k₁₁ (splay) im Vergleich zu Alkyl- bzw. Alkoxyresten. 4-Alkenylreste, 3-Alkenylreste und dergleichen ergeben im allgemeinen tiefere Schwellenspannungen und kleinere Werte von k₃₃/k₁₁ im Vergleich zu Alkyl- und Alkoxyresten.

Eine -CH₂CH₂-Gruppe führt im allgemeinen zu höheren Werten von k₃₃/k₁₁ im Vergleich zu einer einfachen Kovalenzbindung. Höhere Werte von k₃₃/k₁₁ ermöglichen z.B. flachere Transmissionskennlinien in TN-Zellen mit 90° Verdrillung (zur Erzielung von Grautönen) und steilere Transmissionskennlinien in STN-, SBE- und OMI-Zellen (höhere Multiplexierbarkeit) und umgekehrt.

Das optimale Mengenverhältnis der Verbindungen der Formeln I und II + III + IV + V + VI + VII + VIII hängt weitgehend von den gewünschten Eigenschaften, von der Wahl der Komponenten der Formeln I, II, III, IV, V, VI, VII und/oder VIII und von der Wahl weiterer gegebenenfalls vorhandener Komponenten ab. Geeignete Mengenverhältnisse innerhalb des oben an-gegebenen Bereichs können von Fall zu Fall leicht ermittelt werden.

Die Gesamtmenge an Verbindungen der Formeln I bis XV in den erfindungsgemäßen Gemischen ist nicht kritisch. Die Gemische können daher eine oder mehrere weitere Komponenten enthalten zwecks Optimierung verschiedener Eigenschaften. Der beobachtete Effekt auf die Ansprechzeiten und die Schwellenspannung ist jedoch in der Regel umso größer je höher die Gesamtkonzentration an Verbindungen der Formeln 1 bis XV ist.

In einer besonders bevorzugten Ausführungsform enthalten die erfindungsgemäßen Medien Verbindungen der Formel II bis VIII (vorzugsweise II, III und/oder IV, insbesondere IVa), worin X⁰ F, OCF₃, OCHF₂, F, OCH=CF₂, OCF=CF₂ oder OCF₂-CF₂H bedeutet. Eine günstige synergistische Wirkung mit den Verbindungen der Formel I führt zu besonders vorteilhaften Eigenschaften. Insbesondere Mischungen enthaltend Verbindungen der Formel I und der Formel IVa zeichnen sich durch ihre niedrigen Schwellenspannungen aus.

Der Aufbau der erfindungsgemäßen STN- bzw. MFK-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefaßt und umfaßt auch alle Abwandlungen und Modifikationen der MFK-Anzeige, insbesondere auch Matrix-Anzeigeelemente auf Basis poly-Si TFT oder MIM und ganz besonders reflektive Anzeigen.

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation. Weiterhin ist es möglich die Mischungen auf andere herkömmliche Arten, z. B. durch Verwendungen von Vormischungen, z. B. Homologen-Mischungen oder unter Verwendung von sogenannten "Multi-Bottle"-Systemen herzustellen.

Die Dielektrika können auch weitere, dem Fachmann bekannte und in der Literatur beschriebene Zusätze enthalten. Beispielsweise können 0-15 %, vorzugsweise 0-10 %, pleochroitische Farbstoffe und/oder chirale Dotierstoffe zugesetzt werden. Die einzelnen zugesetzten Verbindungen werden in Konzentrationen von 0,01 bis 6 %, bevorzugt von 0,1 bis 3 % eingesetzt. Dabei werden jedoch die Konzentrationsangaben der übrigen Bestandteile der Flüssigkristallmischungen also der flüssigkristallinen oder mesogenen Verbindungen, ohne Berücksichtigung der Konzentration dieser Zusatzstoffe angegeben.

C bedeutet eine kristalline, S eine smektische, S_{C} eine smektisch C, N eine nematische und I die isotrope Phase.

In der vorliegenden Anmeldung und in den folgenden Beispielen sind die Strukturen der Flüssigkristallverbindungen durch Acronyme angegeben, wobei die Transformation in chemische Formeln gemäß folgender Tabellen A und B erfolgt. Alle Reste CₙH₂ₙ₊₁ und CₘH₂ₘ₊₁ sind geradkettige Alkylreste mit n bzw. m C-Atomen. n und m bedeuten jeweils unabhängig voneinander eine ganze Zahl, insbesondere 0, 1, 2, 3, 4, 5, 6, 7, 8, 9 oder 10. Die Codierung gemäß Tabelle B versteht sich von selbst. In Tabelle A ist nur das Acronym für den Grundkörper angegeben. Im Einzelfall folgt getrennt vom Acronym für den Grundkörper mit einem Strich ein Code für die Substituenten R¹, R², L¹ und L²:

| Code für R¹, R², L¹, L² | R¹ | R² | L¹ | L² |
|---|---|---|---|---|
| nm | CₙH₂ₙ₊₁ | CₘH₂ₘ₊₁ | H | H |
| nOm | CₙH₂₊₁ | OCₘH₂ₘ₊₁ | H | H |
| nO.m | OCₙH₂ₙ₊₁ | CₘH₂ₘ₊₁ | H | H |
| n | CₙH₂ₙ₊₁ | CN | H | H |
| nN.F | CₙH₂ₙ₊₁ | CN | H | F |
| nF | CₙH₂ₙ₊₁ | F | H | H |
| nOF | OCₙH₂ₙ₊₁ | F | H | H |
| nCl | CₙH₂ₙ₊₁ | Cl | H | H |
| nF.F | CₙH₂ₙ₊₁ | F | H | F |
| nF.F.F | CₙH₂ₙ₊₁ | F | F | F |
| nCF₃ | CₙH₂ₙ₊₁ | CF₃ | H | H |
| nOCF₃ | CₙH₂ₙ₊₁ | OCF₃ | H | H |
| nOCF₂ | CₙH₂ₙ₊₁ | OCHF₂ | H | H |
| nS | CₙH₂ₙ₊₁ | NCS | H | H |
| rVsN | CᵣH₂ᵣ₊₁-CH=CH-CₛH₂ₛ- | CN | H | H |
| V-T | CH₂=CH | CF₃ | H | H |
| V2-T | CH₂-CH-C₂H₄ | CF₃ | H | H |
| 1V-OT | CH₃-CH=CH | OCF₃ | H | H |
| rEsN | CᵣH₂ᵣ₊₁-O-CₛH₂ₛ- | CN | H | H |
| nAm | CₙH₂ₙ₊₁ | COOCₘH₂ₘ₊₁ | H | H |
| nOCCF₂.F.F | CₙH₂ₙ₊₁ | OCH₂ CF₂H | F | F |

Bevorzugte Mischungskomponenten finden sich in den Tabellen A und B.

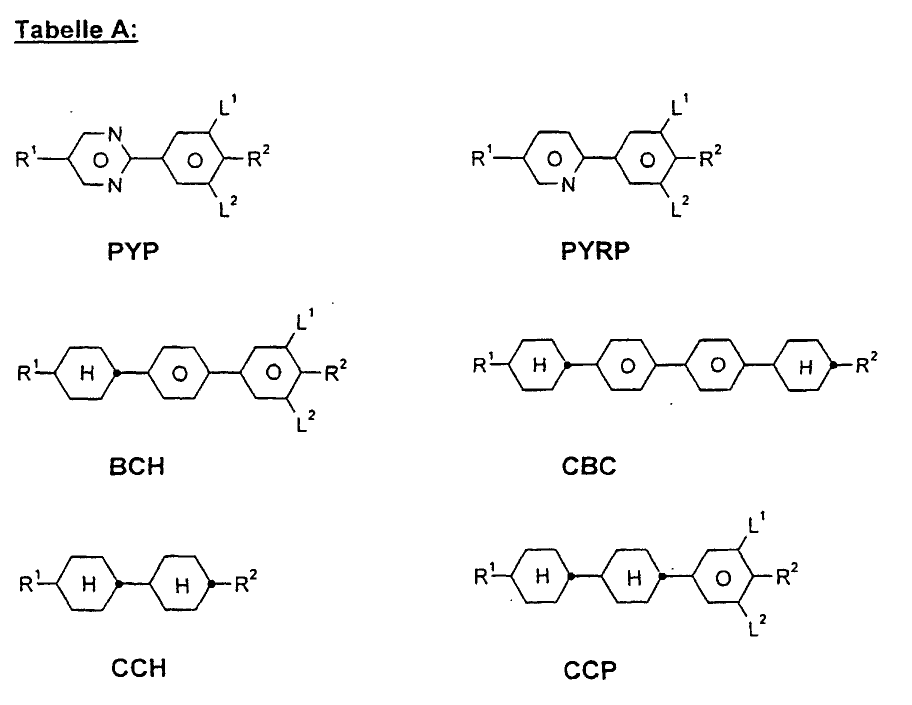

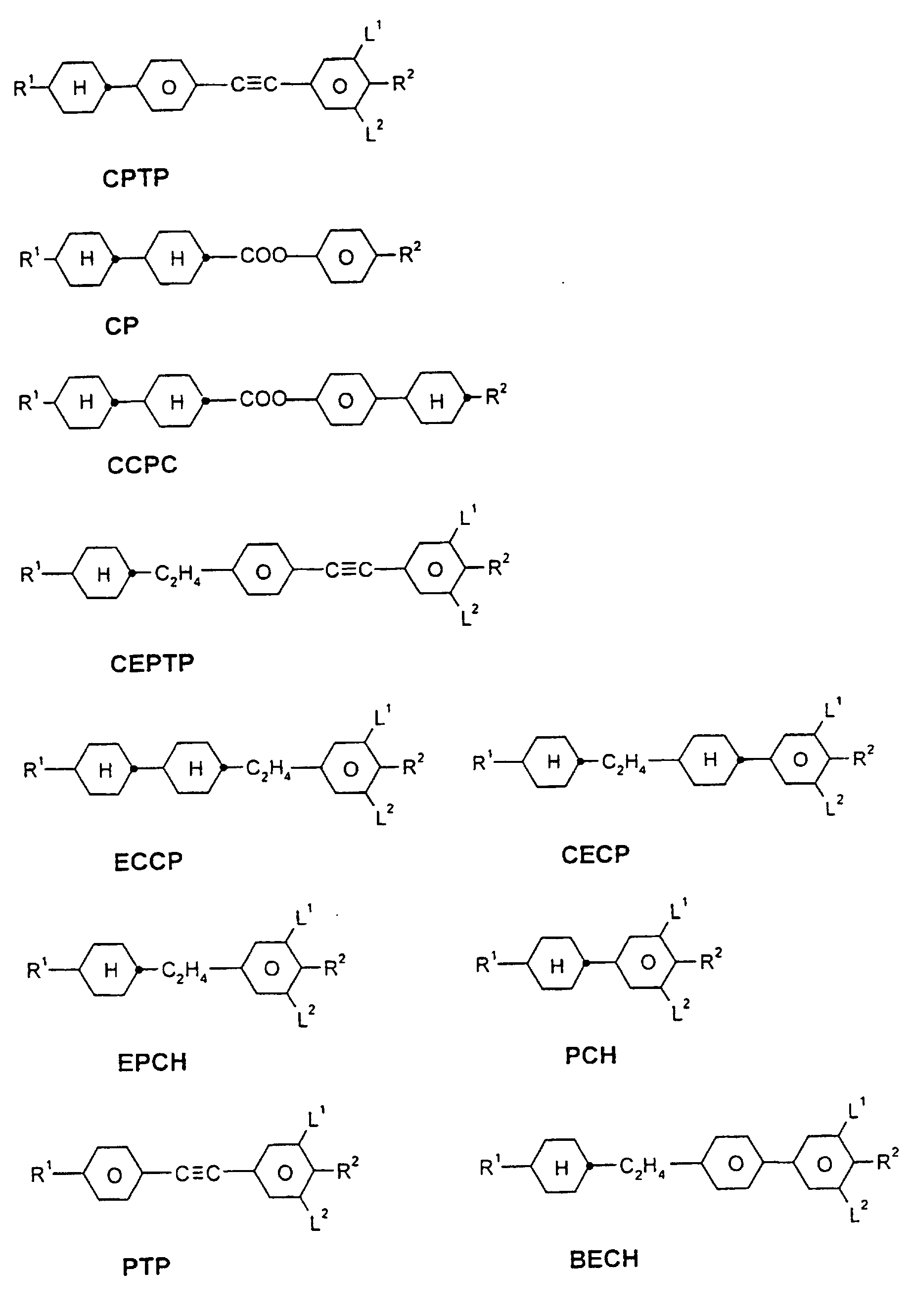

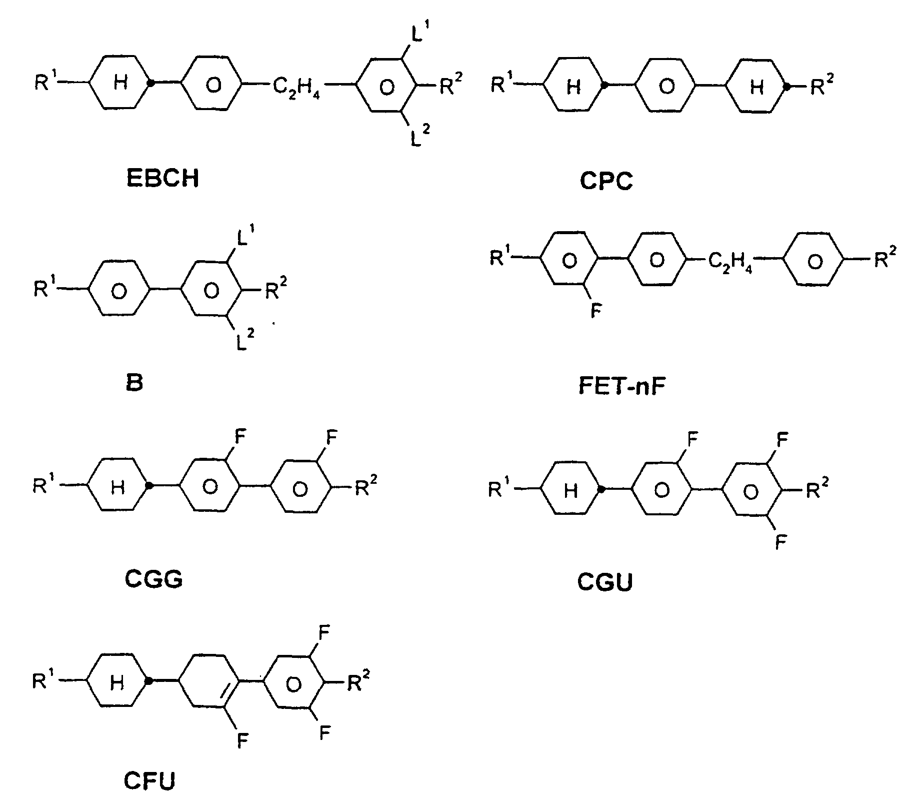

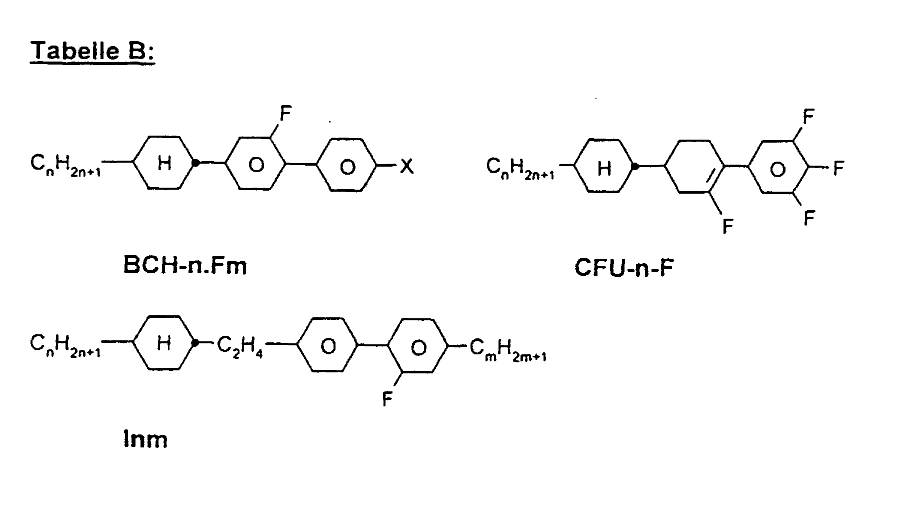

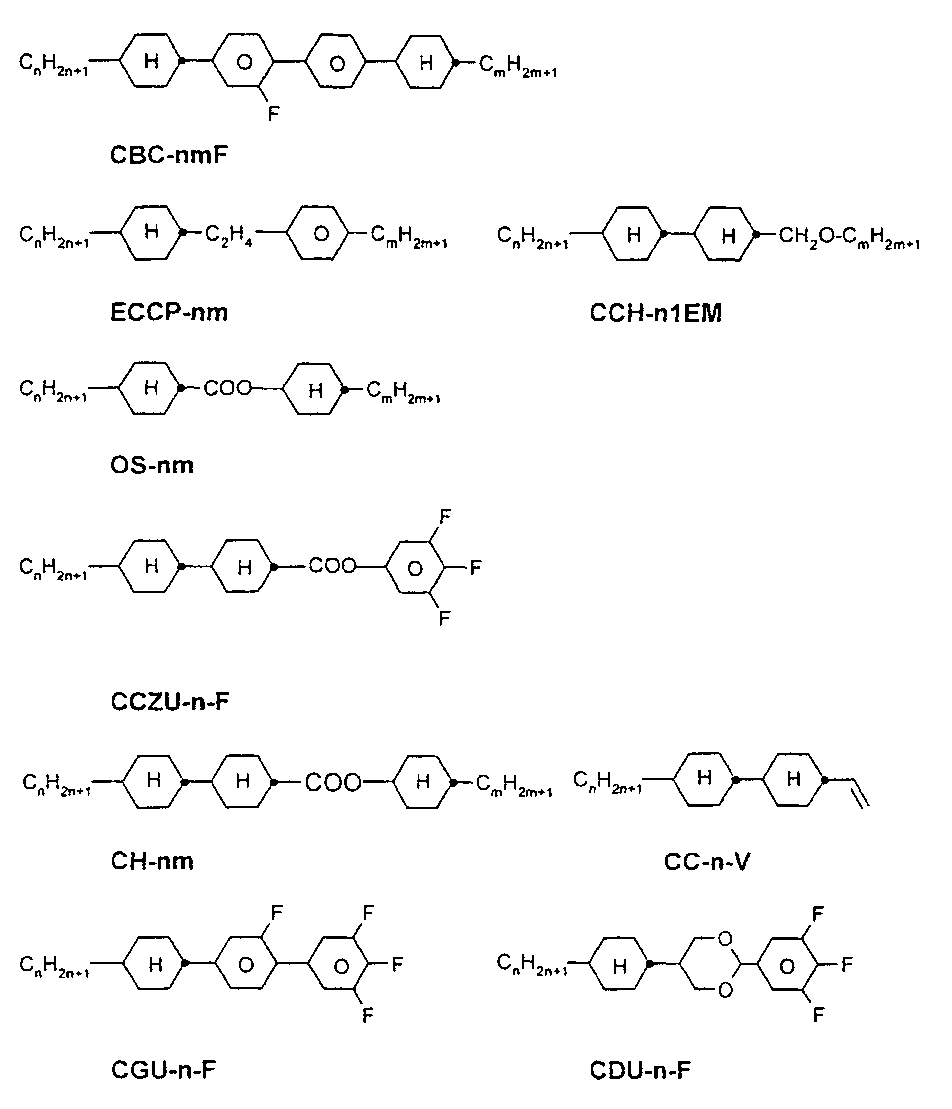

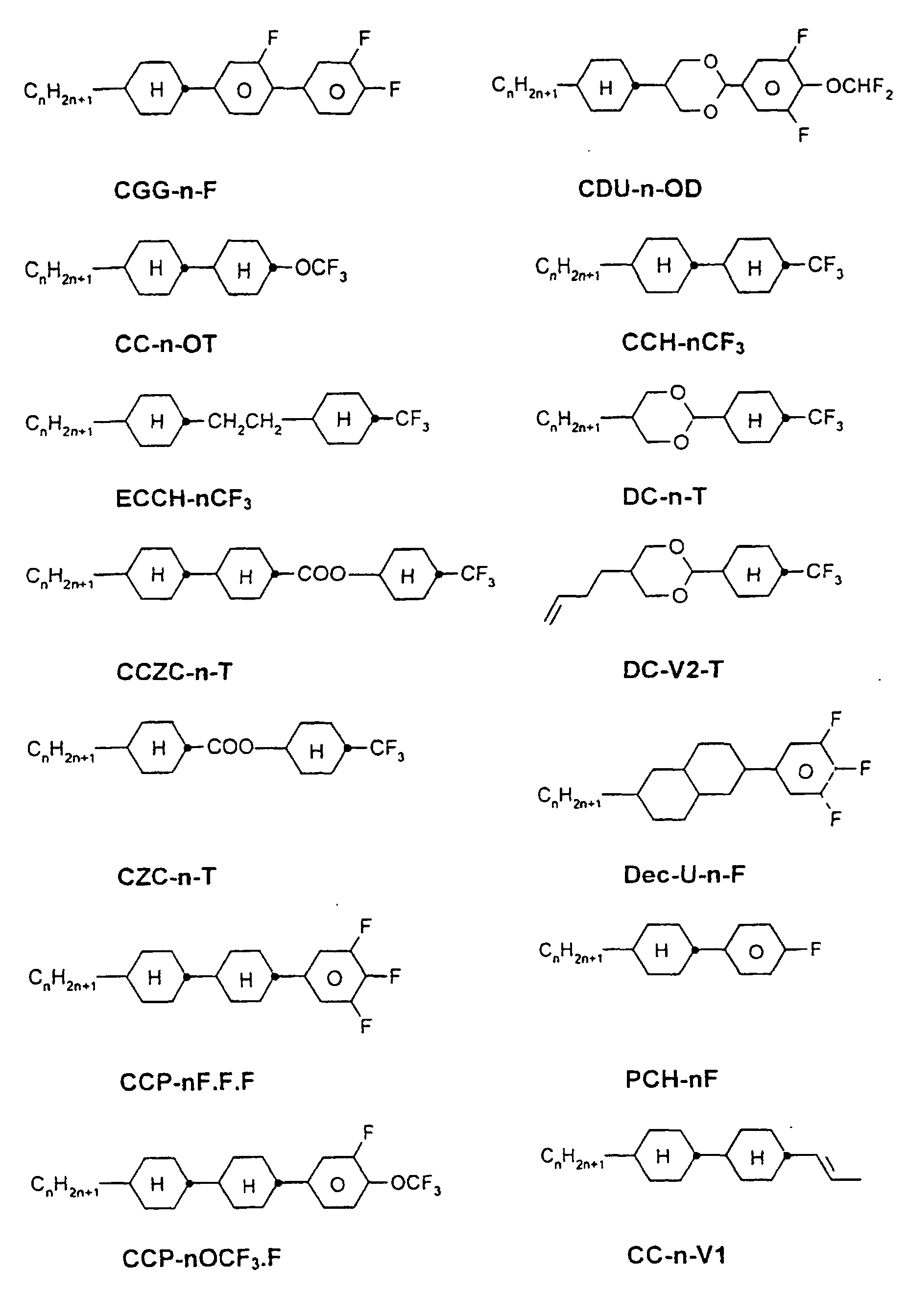

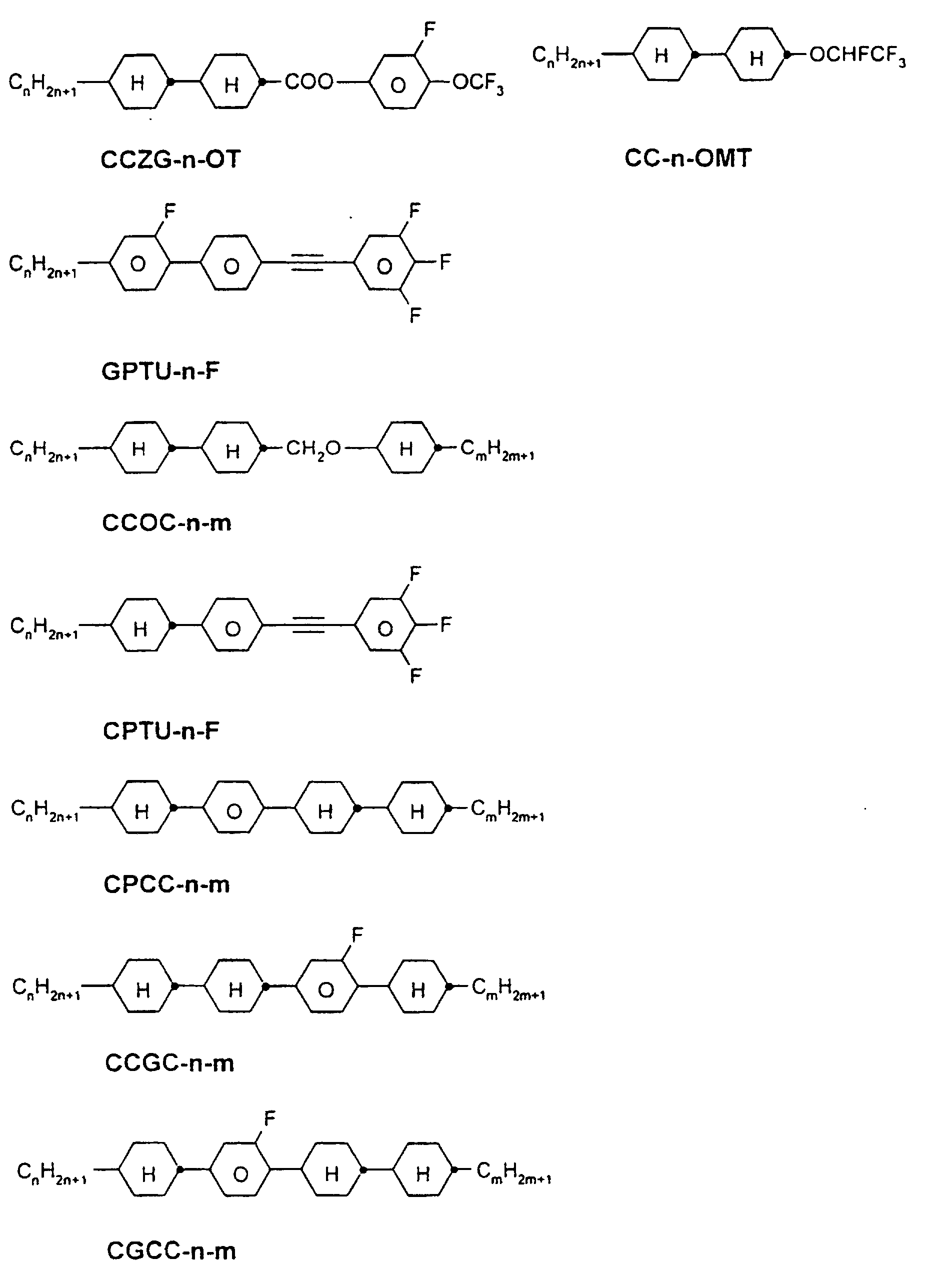

Insbesondere bevorzugt sind flüssigkristalline Mischungen, die neben ein, zwei oder drei Verbindungen der Formel 1, ein, zwei, drei, vier, fünf, sechs oder mehr Verbindungen aus Tabelle B enthalten.

Die folgenden Beispiele sollen die Erfindung erläutern, ohne sie zu begrenzen. Vor- und nachstehend bedeuten Prozentangaben Gewichtsprozent. Alle Temperaturen sind in Grad Celsius angegeben. Fp. bedeutet Schmelzpunkt, Kp. = Klärpunkt. Ferner bedeuten K = kristalliner Zustand, N = nematische Phase, S = smektische Phase und I = isotrope Phase. Die Angaben zwischen diesen Symbolen stellen die Übergangstemperaturen dar. Δn bedeutet optische Anisotropie (589 nm, 20 °C) und die Fließ-Viskosität ν₂₀ (mm²/sec) und die Rotationsviskosität γ₁ (mPa·s) wurden jeweils bei 20 °C bestimmt.

V₁₀ bezeichnet die Spannung für 10 % Transmission (Blickrichtung senkrecht zur Plattenoberfläche). t_{*on*} bezeichnet die Einschaltzeit und t_{*off*} die Ausschaltzeit bei einer Betriebsspannung entsprechend dem zweifachen Wert von V₁₀. Δn bezeichnet die optische Anisotropie und nₒ den Brechungsindex. Δε bezeichnet die dielektrische Anisotropie (Δε = ε_{||} - ε_{⊥}, wobei ε_{||} die Dielektrizitätskonstante parallel zu den Moleküllängsachsen und ε_{┴} die Dielektrizitätskonstante senkrecht dazu bedeutet). Die elektrooptischen Daten wurden in einer TN-Zelle im 1. Minimum (d.h. bei einem d · Δn-Wert von 0,5) bei 20 °C gemessen, sofern nicht ausdrücklich etwas anderes angegeben wird. Die optischen Daten wurden bei 20 °C gemessen, sofern nicht ausdrücklich etwas anderes angegeben wird.

### Mischungsbeispiele

| Beispiel 1 - Low Δn-TFT-Mischung | | | |
|---|---|---|---|
| CCH-3CF₃ | 8,0 % | S → N | < -40°C |
| CCH-5CF₃ | 12,0 % | Klärpunkt: | 72 °C |
| CC-5-V | 5,0 % | Δn [589 nm, 20°C]: | +0,0578 |
| CCH-303 | 5,0 % | Δε, [1kHz, 20°C]: | +6,5 |
| CCH-501 | 12,0 % | γ₁ [mPa.s, 20°C]: | 129 |
| CCP-2F.F.F | 12,0 % | d·Δn [µm, 20°C]: | 0,5 |
| CCP-3F.F.F | 6,0 % | V_{10,0,20} [V]: | 1,62 |
| CCZU-2-F | 6,0 % | | |
| CCZU-3-F | 19,0 % | | |
| CCZU-5-F | 6,0 % | | |
| CH-33 | 3,0 % | | |
| CH-35 | 3,0 % | | |
| CCPC-34 | 3,0 % | | |

| Beispiel 2 - Low Δn-TFT-Mischung | | | |
|---|---|---|---|
| ECCH-5CF₃ | 20,0 % | | |
| CC-5-V | 5,0 % | Klärpunkt: | +74 °C |
| CCH-303 | 5,0 % | Δn [589 nm, 20 °C]: | +0,0585 |
| CCH-501 | 12,0 % | Δε [1kHz, 20 °C]: | +6,5 |
| CCP-2F.F.F | 12,0 % | γ₁ [mPa.s, 20 °C]: | 141 |
| CCP-3F.F.F | 6,0 % | d·Δn [µm, 20 °C]: | 0,5 |
| CCZU-2-F | 6,0 % | Verdrillung: | 90 °C |
| CCZU-3-F | 19,0 % | V_{10,0,20} [V]: | 1,69 |
| CCZU-5-F | 6,0 % | | |
| CH-33 | 3,0 % | | |
| CH-35 | 3,0 % | | |
| CCPC-34 | 3,0 % | | |

| Beispiel 3 - Low Δn-TFT-Mischung | | | |
|---|---|---|---|
| CCH-3CF₃ | 9,0 % | S -> N | < -30 °C |
| CCH-5CF₃ | 12,0 % | Klärpunkt: | 78,5 °C |
| CC-5-V | 5,0 % | Δn [589 nm, 20°C]: | +0,0646 |
| CH-33 | 3,0 % | Δε [1kHz, 20°C]: | +8,8 |
| CCP-2F.F.F | 12,0 % | γ₁ [mPa.s, 20°C]: | 140 |
| CCP-3F.F.F | 12,0 % | d·Δn [µm, 20°C]: | 0,5 |
| CCP-5F.F.F | 5,0 % | Verdrillung: | 90° |
| CCP-20CF₃.F | 6,0 % | V_{10,0,20}[V]: | 1,43 |
| CCZU-2-F | 6,0 % | | |
| CCZU-3-F | 20,0 % | | |
| CCZU-5-F | 6,0 % | | |
| CCPC-34 | 4,0 % | | |

| Beispiel 4 - Low Δn-TFT-Mischung | | | |
|---|---|---|---|
| ECCH-5CF₃ | 21,0 % | | |
| CC-5-V | 5,0 % | Klärpunkt: | +82,0°C |
| CH-33 | 3,0 % | Δn [589 nm, 20°C]: | +0,0654 |
| CCP-2F.F.F | 12,0 % | Δε [1kHz, 20°C]: | +8,5 |
| CCP-3F.F.F | 12,0 % | γ₁ [mPa.s, 20°C]: | 165 |
| CCP-5F.F.F | 5,0 % | d·Δn [µm, 20°C]: | 0,5 |
| CCP-20CF₃.F | 6,0 % | V_{10,0,20} [V]: | 1,49 |
| CCZU-2-F | 6,0 % | | |
| CCZU-3-F | 20,0 % | | |
| CCZU-5-F | 6,0 % | | |
| CCPC-34 | 4,0 % | | |

| Beispiel 5 - Low Δn-TFT-Mischung | | | |
|---|---|---|---|
| CCH-3CF₃ | 10,0 % | S → N | < -30°C |
| CCH-5CF₃ | 14,0 % | Klärpunkt: | +72,0°C |
| CCH-302 | 7,0 % | Δn [589 nm, 20°C]: | +0,0560 |
| CCH-303 | 5,0 % | V_{10,0,20}[V]: | 1,87 |
| CCH-501 | 12,0 % | | |
| CCP-2F.F.F | 9,0 % | | |
| CCZU-2-F | 6,0 % | | |
| CCZU-3-F | 19,0 % | | |
| CCZU-5-F | 6,0 % | | |
| CH-33 | 3,0 % | | |
| CH-35 | 3,0 % | | |
| CH-43 | 2,0 % | | |
| CCPC-33 | 2,0 % | | |
| CCPC-34 | 2,0 % | | |

| Beispiel 6 - Low Δn-TFT-Mischung | | | |
|---|---|---|---|
| CCH-3CF₃ | 8,0 % | S → N | > -30°C |
| CCH-5CF₃ | 12,0 % | Klärpunkt: | +70,5°C |
| OS-33 | 6,0 % | Δn [589 nm, 20°C]: | +0,0562 |
| CCH-302 | 4,0 % | V_{10,020} [V]: | 1,80 |
| CCH-303 | 5,0 % | | |
| CCH-501 | 12,0 % | | |
| CCP-2F.F.F | 12,0 % | | |
| CCZU-2-F | 6,0 % | | |
| CCZU-3-F | 19,0 % | | |
| CCzU-5-F | 6,0 % | | |
| CH-33 | 3,0 % | | |
| CH-35 | 3,0 % | | |
| CCPC-33 | 2,0 % | | |
| CCPC-34 | 2,0 % | | |

| Beispiel 7 - Low Δn-TFT-Mischung | | | |
|---|---|---|---|
| CCH-30CF₃ | 10,0 % | | |
| CCH-50CF₃ | 14,0 % | Klärpunkt: | +75,5 °C |
| CCH-302 | 7,0 % | Δn [589 nm, 20°C]: | +0,0572 |
| CCH-303 | 7,0 % | d·Δn [µm, 20°C]: | 0,5 |
| CCH-501 | 10,0 % | V_{10,0,20}[V]: | 1,74 |
| CCP-2F.F.F | 9,0 % | Verdrillung: | 90° |
| CCZU-2-F | 6,0 % | | |
| CCZU-3-F | 19,0 % | | |
| CCZU-5-F | 6,0 % | | |
| CH-33 | 3,0 % | | |
| CH-35 | 3,0 % | | |
| CH-43 | 3,0 % | | |
| CCPC-33 | 3,0 % | | |

| Beispiel 8 - Low Δn-TFT-Mischung | | | |
|---|---|---|---|
| DC-V2-T | 15,0 % | S → N | < -30°C |
| CCH-302 | 15,0 % | Klärpunkt: | +69,0°C |
| CH-34 | 4,0 % | Δn [589 nm, 20°C]: | +0,0568 |
| CCH-501 | 10,0 % | d·Δn [µm, 20°C]: | 0,49 |
| CCP-2F.F.F | 12,0 % | V_{10,0,20}[V]: | 1,53 |
| CCZU-2-F | 6,0 % | Verdrillung: | 90° |
| CCZU-3-F | 20,0 % | | |
| CCZU-5-F | 6,0 % | | |
| CH-33 | 3,0 % | | |
| CH-35 | 3,0 % | | |
| CH-43 | 3,0 % | | |
| CCPC-33 | 3,0 % | | |

| Beispiel 9 - Low Δn-TFT-Mischung | | | |
|---|---|---|---|
| CCH-301 | 14,0 % | S → N | < -30°C |
| CCH-501 | 11,0 % | Klärpunkt: | +80,0 °C |
| CCP-2F.F.F | 10,0 % | Δn [589 nm, 20°C]: | +0,0607 |
| CCP-3F.F.F | 13,0 % | d·Δn [µm, 20 °C]: | 0,55 |
| CCP-5F.F.F | 5,0 % | V_{10,0,20} [V]: | 1,53 |
| CCZU-2-F | 5,0 % | Verdrillung: | 90° |
| CCZU-3-F | 17,0 % | | |
| CCZU-5-F | 5,0 % | | |
| CH-33 | 3,0 % | | |
| CH-35 | 3,0 % | | |
| CH-43 | 3,0 % | | |
| CCPC-33 | 3,0 % | | |
| CCH-3CF₃ | 8,0 % | | |

| Beispiel 10 - Reflektive TN-Mischung | | | |
|---|---|---|---|
| CCH-301 | 11,5 % | S → N | < -30°C |
| CCP-2F.F.F | 10,0 % | Klärpunkt: | +80,0°C |
| CCP-3F.F.F | 13,0 % | Δn [589 nm, 20°C]: | +0,0654 |
| CCP-5F.F.F | 5,0 % | d·Δn [µm, 20 °C]: | 0,55 |
| CCZU-2-F | 5,0 % | V_{10,0,20} [V]: | 1,38 |
| CCZU-3-F | 16,0 % | Verdrillung: | 90° |
| CCZU-5-F | 4,0 % | | |
| CCP-20CF₂.F.F | 5,0 % | | |
| CCP-30CF₂.F.F | 6,0 % | | |
| CCP-50CF₂.F.F | 6,0 % | | |
| CH-33 | 3,0 % | | |
| CH-35 | 2,0 % | | |
| CH-43 | 2,5 % | | |
| CCH-3CF₃ | 7,0 % | | |
| CCH-5CF₃ | 4,0 % | | |

| Beispiel 11 - Reflektive TN-Mischung | | | |
|---|---|---|---|
| CCH-301 | 11,0 % | S → N | < -30°C |
| CCP-2F.F.F | 10,0 % | Klärpunkt: | +76,0°C |
| CCP-3F.F.F | 13,0 % | Δn [589 nm, 20°C]: | +0,0649 |
| CCP-5F.F.F | 5,0 % | d·Δn [µm, 20 °C]: | 0,55 |
| CCZU-2-F | 4,0 % | V_{10,0,20} [V]: | 1,39 |
| CCZU-3-F | 15,0 % | Verdrillung: | 90° |
| CCZU-5-F | 4,0 % | | |
| CCP-20CF₂.F.F | 6,0 % | | |
| CCP-30CF₂.F.F | 6,0 % | | |
| CCP-50CF₂.F.F | 7,0 % | | |
| CH-33 | 3,0 % | | |
| CH-43 | 3,0 % | | |
| CCH-3CF₃ | 8,0 % | | |
| CCH-5CF₃ | 5,0 % | | |

| Beispiel 12 - Reflektive TN-Mischung | | | |
|---|---|---|---|
| CCH-301 | 6,0 % | S → N | < -30°C |
| CCP-2F.F.F | 10,0 % | Klärpunkt: | +80,0 |
| CCP-3F.F.F | 13,0 % | Δn [589 nm, 20 °C]: | +0,0652 |
| CCP-5F.F.F | 5,0 % | d·Δdn [µm, 20 °C]: | 0,55 |
| CCZU-2-F | 5,0 % | V_{10,0,20}[V]: | 1,43 |
| CCZU-3-F | 16,0 % | Verdrillung: | 90° |
| CCZU-5-F | 4,0% | | |
| CCP-30CF₃.F | 6,0 % | | |
| CCP-50CF₃.F | 6,0 % | | |
| CCP-50CF₂.F.F | 5,0 % | | |
| CH-33 | 3,0 % | | |
| CH-35 | 2,0 % | | |
| CH-43 | 2,0 % | | |
| CCH-3CF₃ | 10,0 % | | |
| CCH-5CF₃ | 7,0 % | | |

| Beispiel 13 - Low Δn-TFT-Mischung | | | |
|---|---|---|---|
| CCH-501 | 12,0 % | S → N | < -40°C |
| CH-33 | 3,0 % | Klärpunkt: | +81,5°C |
| CH-35 | 3,0 % | Δn [589 nm, 20°C]: | +0,0604 |
| CH-43 | 3,0 % | Δε [1kHz, 20° C]: | +8,4 |
| CH-45 | 3,0 % | γ₁ [mPa.s, 20°C]: | 160 |
| CCP-2F.F.F | 9,0 % | d·Δn [µm, 20 °C]: | 0,5 |
| CCZU-2-F | 6,0 % | V_{10,0,20} [V]: | 1,42 |
| CCZU-3-F | 15,0 % | Verdrillung: | 90° |
| CCZU-5-F | 6,0 % | | |
| CDU-2-F | 9,0 % | | |
| CDU-3-F | 9,0 % | | |
| CDU-5-F | 3,0 % | | |
| CCH-3CF₃ | 7,0 % | | |
| CCH-5CF₃ | 8,0 % | | |
| CCPC-34 | 4,0 % | | |

| Beispiel 14 - Low Δn-TFT-Mischung | | | |
|---|---|---|---|
| CCH-301 | 4,0 % | S → N | < -40°C |
| CCH-501 | 9,0 % | Klärpunkt: | +80,5°C |
| CH-33 | 3,0 % | Δn [589 nm, 20°C]: | +0,0640 |
| CH-35 | 3,0 % | Δε [1kHz, 20°C]: | +7,6 |
| CH-43 | 2,0 % | γ₁ [mPa.s, 20°C]: | 161 |
| CCP-2F.F.F | 9,0 % | d·Δn [µm, 20°C]: | 0,5 |
| CCP-3F.F.F | 6,0 % | V_{10,0,20} [V]: | 1,28 |
| CCZU-2-F | 6,0 % | Verdrillung: | 90° |
| CCZU-3-F | 15,0 % | | |
| CCZU-5-F | 6,0 % | | |
| CDU-2-F | 10,0 % | | |
| CDU-3-F | 9,0 % | | |
| CDU-5-F | 7,0 % | | |
| CCH-3CF₃ | 7,0 % | | |
| CCPC-34 | 4,0 % | | |

| Beispiel 15 - Reflektive TN-Mischung | | | |
|---|---|---|---|
| CCH-301 | 12,0 % | S → N | < -20 °C |
| CH-33 | 3,0 % | Klärpunkt: | +93,0°C |
| CH-35 | 3,0 % | Δn [589 nm, 20 °C]: | +0,0653 |
| CCP-40CF₃ | 8,0 % | d·Δn [µm, 20 °C]: | 0,5 |
| CCP-2F.F.F | 12,0 % | V_{10,0,20} [V]: | 1,55 |
| CCP-3F.F.F | 12,0 % | Verdrillung: | 90° |
| CCP-5F.F.F | 6,0 % | | |
| CCZU-2-F | 6,0 % | | |
| CCZU-3-F | 13,0 % | | |
| CCZU-5-F | 6,0 % | | |
| CZC-3-T | 6,0 % | | |
| CCZC-3-T | 10,0 % | | |
| CCPC-34 | 3,0 % | | |

| Beispiel 16 | | | |
|---|---|---|---|
| CCH-3CF₃ | 9,00 % | S → N | < -30°C |
| CCH-5CF₃ | 12,00 % | Klärpunkt: | +80,0°C |
| CC-5-V | 7,00 % | Δn [589 nm, 20°C]: | +0,0648 |
| CH-33 | 3,00 % | d·Δn [20 °C, µm]: | 0,50 |
| CCP-2F.F.F | 12,00 % | Verdrillung [°]: | 90 |
| CCP-3F.F.F | 11,00 % | V_{10,0,20} [V]: | 1,49 |
| CCP-5F.F.F | 6,00 % | | |
| CCP-20CF₃.F | 7,00 % | | |
| CCZU-2-F | 6,00 % | | |
| CCZU-3-F | 16,00 % | | |
| CCZU-5-F | 6,00 % | | |
| CCPC-34 | 5,00 % | | |

| Beispiel 17 | | | |
|---|---|---|---|
| CCH-501 | 7,00 % | S → N | < -40°C |
| CH-33 | 3,00 % | Klärpunkt: | +86,0 °C |
| CH-35 | 3,00 % | Δn [589 nm, 20°C]: | +0,0645 |
| CH-43 | 3,00 % | Δε [1kHz, 20 °C]: | +10,2 |
| CCP-2F.F.F | 7,00 % | d·Δn [20 °C, µm]: | 0,50 |
| CCP-3F.F.F | 5,00 % | Verdrillung [°]: | 90 |
| CCZU-2-F | 6,00 % | V_{10,0,20}[V]: | 1,36 |
| CCZU-3-F | 15,00 % | | |
| CCZU-5-F | 6,00 % | | |
| CDU-2-F | 9,00 % | | |
| CDU-3-F | 9,00 % | | |
| CDU-5-F | 6,00 % | | |
| CCH-3CF₃ | 7,00 % | | |
| CCH-5CF₃ | 8,00 % | | |
| CCPC-34 | 3,00 % | | |
| CCPC-33 | 3,00 % | | |

| Beispiel 18 | | | |
|---|---|---|---|
| CCH-501 | 12,00 % | S → N | < -40 °C |
| CH-33 | 3,00 % | Klärpunkt: | +82,5°C |
| CH-35 | 3,00 % | Δn [589 nm, 20°C]: | +0,0608 |
| CH-43 | 3,00 % | d·Δn [20 °C, µm]: | 0,50 |
| CH-45 | 3,00 % | Verdrillung [°]: | 90 |
| CCP-2F.F.F | 6,00 % | V_{10,0,20}[V]: | 1,42 |
| CCP-3F.F.F | 4,00 % | | |
| CCZU-2-F | 6,00 % | | |
| CCZU-3-F | 14,00% | | |
| CCZU-5-F | 6,00 % | | |
| CDU-2-F | 8,00 % | | |
| CDU-3-F | 8,00 % | | |
| CDU-5-F | 5,00 % | | |
| CCH-3CF₃ | 8,00 % | | |
| CCH-5CF₃ | 7,00 % | | |
| CCPC-34 | 4,00 % | | |

| Beispiel 19 | | | |
|---|---|---|---|
| CCH-301 | 5,00 % | S → N | <-40°C |
| CCH-501 | 16,00 % | Klärpunkt: | +86,0 °C |
| CCP-2F.F.F | 12,00 % | Δn [589 nm, 20°C]: | +0,0622 |
| CCP-3F.F.F | 12,00 % | Δε (1kHz, 20°C]: | +4,8 |
| CCP-5F.F.F | 6,00 % | d·Δn [20 °C, µm]: | 0,50 |
| CCP-20CF₃ | 5,00 % | Verdrillung [°]: | 90 |
| CCP-40CF₃ | 6,00 % | V_{10,0,20}[V]: | 1,98 |
| CCP-20CF₃.F | 9,00 % | | |
| CH-33 | 4,00 % | | |
| CH-35 | 3,00 % | | |
| CH-43 | 3,00% | | |
| CH-45 | 3,00 % | | |
| CCPC-34 | 4,00 % | | |
| CCH-3CF₃ | 6,00 % | | |
| CCH-5CF₃ | 6,00 % | | |

| Beispiel 20 | | | |
|---|---|---|---|
| CH-33 | 3,00 % | S → N | < -40°C |
| CH-35 | 2,00 % | Klärpunkt: | +76,5 °C |
| CCP-2F.F.F | 10,00 % | Δn [589 nm, 20°C]: | +0,0642 |
| CCZU-2-F | 6,00 % | d·Δn [20°C, µm]: | 0,50 |
| CCZU-3-F | 16,00 % | Verdrillung [°]: | 90 |
| CCZU-5-F | 6,00% | V₁₀ [V]: | 1,22 |
| CDU-2-F | 9,00 % | | |
| CDU-3-F | 11,00 % | | |
| CDU-5-F | 8,00 % | | |
| CCH-3CF₃ | 11,00% | | |
| CCH-5CF₃ | 11,00% | | |
| CCPC-33 | 4,00 % | | |
| CCPC-34 | 3,00 % | | |

| Beispiel 21 | | | |
|---|---|---|---|
| CH-33 | 4,00 % | S → N | < -40 °C |
| CH-35 | 4,00 % | Klärpunkt: | +77,0 °C |
| CH-43 | 2,00 % | Δn [589 nm, 20°C]: | +0,0628 |
| CCP-2F.F.F | 9,00 % | d·Δn [20°C, µm]: | 0,50 |
| CCZU-2-F | 6,00 % | Verdrillung [°]: | 90 |
| CCZU-3-F | 16.00% | V₁₀ [V]: | 1,24 |
| CCZU-5-F | 6,00 % | | |
| CDU-2-F | 9,00 % | | |
| CDU-3-F | 11.00% | | |
| CDU-5-F | 8,00% | | |
| CCH-3CF₃ | 11,00% | | |
| CCH-5CF₃ | 10,00 % | | |
| CCPC-34 | 4,00% | | |

| Beispiel 22 | | | |
|---|---|---|---|
| CH-33 | 4,00% | S → N | < -30°C |
| CH-35 | 3,00% | Klärpunkt: | +82,0°C |
| CCP-2F.F.F | 10.00% | Δn [589 nm, 20°C]: | +0,0645 |
| CCZU-2-F | 6,00 % | Δε [kHz, 20°C]: | +11,2 |
| CCZU-3-F | 16,00 % | d·Δn [20°C, µm]: | 0,50 |
| CCZU-5-F | 6,00 % | Verdrillung [°]: | 90 |
| CDU-2-F | 9,00 % | V₁₀ [V]: | 1,27 |
| CDU-3-F | 11,00 % | | |
| CDU-5-F | 8,00 % | | |
| CCH-3CF₃ | 11.00% | | |
| CCH-5CF₃ | 9,00% | | |
| CCPC-33 | 4,00% | | |
| CCPC-34 | 3,00 % | | |

| Beispiel 23 | | | |
|---|---|---|---|
| CH-33 | 4,00 % | S → N | <-30°C |
| CH-35 | 3,00 % | Klärpunkt: | +81,0 °C |
| CH-43 | 3,00 % | Δn [589 nm, 20°C]: | +0,0637 |
| CCP-2F.F.F | 9,00 % | d·Δn [20°C, µm]: | 0,50 |
| CCZU-2-F | 6,00 % | Verdrillung [°]: | 90 |
| CCZU-3-F | 16,00 % | V₁₀[V]: | 1,26 |
| CCZU-5-F | 6,00% | | |
| CDU-2-F | 9,00 % | | |
| CDU-3-F | 11,00 % | | |
| CDU-5-F | 8,00 % | | |
| CCH-3CF₃ | 11,00 % | | |
| CCH-5CF₃ | 9,00 % | | |
| CCPC-33 | 2,00 % | | |
| CCPC-34 | 3,00 % | | |

| Beispiel 24 | | | |
|---|---|---|---|
| CCH-501 | 8,00 % | S → N | < -40 °C |
| CH-33 | 4,00 % | Klärpunkt: | +82,0°C |
| CH-35 | 4,00 % | Δn [589 nm, 20°C]: | +0,0620 |
| CH-43 | 4,00 % | d·Δn [20 °C, µm]: | 0,50 |
| CCP-2F.F.F | 9,00 % | Verdrillung [°]: | 90 |
| CCZU-2-F | 6,00 % | V₁₀ [V]: | 1,36 |
| CCZU-3-F | 16,00 % | | |
| CCZU-5-F | 6,00 % | | |
| CDU-2-F | 9,00 % | | |
| CDU-3-F | 11.00% | | |
| CDU-5-F | 3,00 % | | |
| CCH-3CF₃ | 8,00% | | |
| CCH-5CF₃ | 8,00 % | | |
| CCPC-34 | 4,00 % | | |

| Beispiel 25 | | | |
|---|---|---|---|
| CCH-501 | 12,00 % | S → N | < -40°C |
| CH-33 | 4,00 % | Klärpunkt: | +81,0 °C |
| CH-35 | 4,00 % | Δn [589 nm, 20°C]: | +0,0610 |
| CH-43 | 4,00 % | Δε [kHz, 20 °C]: | +8,9 |
| CCP-2F.F.F | 9,00 % | γ₁ [mPa·s, 20°C]: | 154 |
| CCZU-2-F | 6,00 % | d·Δn [20°C, µm]: | 0,50 |
| CCZU-3-F | 16,00 % | Verdrillung [°]: | 90 |
| CCZU-5-F | 6,00 % | V₁₀[V]: | 1,41 |
| CDU-2-F | 9,00 % | | |
| CDU-3-F | 11,00 % | | |
| CCH-3CF₃ | 7,00 % | | |
| CCH-5CF₃ | 8,00 % | | |
| CCPC-34 | 4,00 % | | |

| Beispiel 26 | | | |
|---|---|---|---|
| CCH-303 | 5,00 % | | |
| CCH-501 | 16,00% | Klärpunkt: | +90,0°C |
| CCP-2F.F.F | 12,00% | Δn [589 nm, 20 °C]: | +0,0628 |
| CCP-3F.F.F | 12,00 % | d·Δn [20 °C, µm]: | 0,50 |
| CCP-5F.F.F | 6,00 % | Verdrillung [°]: | 90 |
| CCP-20CF₃ | 5,00 % | V₁₀ [V]: | 2,08 |
| CCP-40CF₃ | 7,00 % | | |
| CCP-20CF₃.F | 6,00 % | | |
| CH-33 | 4,00 % | | |
| CH-35 | 3,00 % | | |
| CH-43 | 3,00 % | | |
| CH-45 | 3,00 % | | |
| CCPC-33 | 3,00 % | | |
| CCPC-34 | 2,00 % | | |
| CCH-3CF₃ | 6,00 % | | |
| CCH-5CF₃ | 7,00 % | | |

| Beispiel 27 | | | |
|---|---|---|---|
| CCH-3CF₃ | 8,00 % | S → N | < -40 °C |
| CCH-5CF₃ | 8,00 % | Klärpunkt: | +87,5°C |
| CCH-303 | 10,00 % | Δn [589 nm, 20°C]: | +0,0628 |
| CCH-501 | 6,00% | Δε [kHz, 20 °C]: | +7,3 |
| CCP-2F.F.F | 11,00% | d·Δn [20 °C, µm]: | 0,50 |
| CCP-3F.F.F | 10,00% | Verdrillung [°]: | 90 |
| CCP-5F.F.F | 5,00% | V₁₀[V]: | 1,69 |
| CCZU-2-F | 6,00 % | | |
| CCZU-3-F | 16,00% | | |
| CCZU-5-F | 6,00 % | | |
| CCPC-33 | 3,00 % | | |
| CCPC-34 | 2,00 % | | |
| CH-33 | 3,00 % | | |
| CH-35 | 3,00 % | | |
| CH-43 | 3,00 % | | |

| Beispiel 28 | | | |
|---|---|---|---|
| CCH-3CF₃ | 6,00 % | S → N | < -40°C |
| CCH-5CF₃ | 8,00 % | Klärpunkt: | +83,5 °C |
| CCH-303 | 10,00 % | Δn [589 nm, 20°C]: | +0,0620 |
| CCH-501 | 6,00 % | d·Δn [20 °C, µm]: | 0,50 |
| CCP-2F.F.F | 10,00 % | Verdrillung [°]: | 90 |
| CCP-3F.F.F | 7,00 % | V₁₀[V]: | 1,58 |
| CCP-5F.F.F | 5,00 % | | |
| CDU-2-F | 10,00 % | | |
| CDU-3-F | 10,00% | | |
| CDU-5-F | 8,00 % | | |
| CCPC-33 | 3,00 % | | |
| CCPC-34 | 3,00 % | | |
| CH-33 | 4,00 % | | |
| CH-35 | 4,00 % | | |
| CH-43 | 3,00 % | | |
| CH-45 | 3,00 % | | |

| Beispiel 29 | | | |
|---|---|---|---|
| CCH-303 | 15,00 % | S → N | <-30°C |
| CH-33 | 3,00 % | Klärpunkt: | +85,0 °C |
| CH-35 | 3,00 % | Δn [589 nm, 20°C]: | +0,0615 |
| CH-43 | 3,00 % | d·Δn [20°C, µm]: | 0,50 |
| CH-45 | 3,00 % | Verdrillung [°]: | 90 |
| CCP-2F.F.F | 7,00 % | V₁₀ [V]: | 1,53 |
| CCZU-2-F | 6,00 % | | |
| CCZU-3-F | 17,00 % | | |
| CCZU-5-F | 6,00 % | | |
| CDU-2-F | 10,00 % | | |
| CDU-3-F | 9,00 % | | |
| CCH-3CF₃ | 7,00 % | | |
| CCH-5CF₃ | 7,00 % | | |
| CCPC-34 | 4,00 % | | |

| Beispiel 30 | | | |
|---|---|---|---|
| CCH-303 | 11,00 % | | |
| CCH-34 | 5,00 % | Klärpunkt: | +85,0°C |
| CH-33 | 4,00 % | Δn [589 nm, 20 °C]: | +0,0607 |
| CH-35 | 4,00 % | d·Δn [20°C, µm]: | 0,50 |
| CH-43 | 3,00 % | Verdrillung [°]: | 90 |
| CH-45 | 3,00 % | V₁₀ [V]: | 1,55 |
| CCP-2F.F.F | 4,00 % | | |
| CCZU-2-F | 6,00 % | | |
| CCZU-3-F | 17,00 % | | |
| CCZU-5-F | 6,00 % | | |
| CDU-2-F | 10,00 % | | |
| CDU-3-F | 11,00% | | |
| CCH-3CF₃ | 7,00 % | | |
| CCH-5CF₃ | 7,00 % | | |
| CCPC-34 | 2,00 % | | |

| Beispiel 31 | | | |
|---|---|---|---|
| CCH-3CF₃ | 6,00% | S → N | < -20°C |
| CCH-5CF₃ | 7,00 % | Klärpunkt: | +84,0°C |
| CCH-34 | 5,00 % | Δn [589 nm, 20 °C]: | +0,0617 |
| CC-5-V | 2,00 % | | |
| CCH-303 | 11,50% | | |
| CCP-2F.F.F | 9,00 % | | |
| CCP-3F.F.F | 5,00 % | | |
| CCP-5F.F.F | 3,00 % | | |
| CDU-2-F | 11,00 % | | |
| CDU-3-F | 11,00 % | | |
| CDU-5-F | 10,00 % | | |
| CCPC-33 | 2,00 % | | |
| CCPC-34 | 3,00 % | | |
| CH-33 | 4,00 % | | |
| CH-35 | 3,50% | | |
| CH-43 | 3,50 % | | |
| CH-45 | 3,50 % | | |

| Beispiel 32 | | | |
|---|---|---|---|
| CCH-303 | 12,00 % | | |
| CCH-501 | 11,00 % | Klärpunkt: | +86,0°C |
| CH-33 | 3,00 % | Δn [589 nm, 20 °C]: | +0,0610 |
| CH-35 | 3,00 % | d·Δn [20°C, µm]: | 0,50 |
| CH-43 | 3,00 % | Verdrillung [°]: | 90 |
| CH-45 | 3,00 % | V₁₀[V]: | 1,61 |
| CCZU-2-F | 5,00 % | | |
| CCZU-3-F | 16,00 % | | |
| CCZU-5-F | 5,00 % | | |
| CDU-2-F | 9,00 % | | |
| CDU-3-F | 9,00 % | | |
| CDU-5-F | 7,00 % | | |
| CCH-3CF₃ | 5,00 % | | |
| CCH-5CF₃ | 5,00% | | |
| CCPC-34 | 4,00 % | | |

| Beispiel 33 | | | |
|---|---|---|---|
| CCH-303 | 14,00% | | |
| CCH-501 | 11,00 % | Klärpunkt: | +86,0 °C |
| CH-33 | 2,50 % | Δn [589 nm, 20 °C]: | +0,0612 |
| CH-35 | 2,50 % | d·Δn [20 °C, µm]: | 0,50 |
| CH-43 | 3,00 % | Verdrillung [°]: | 90 |
| CH-45 | 3,00% | V₁₀ [V]: | 1,61 |
| CCZU-2-F | 5,00% | | |
| CCZU-3-F | 16,00% | | |
| CCZU-5-F | 5,00 % | | |
| CDU-2-F | 9,00 % | | |
| CDU-3-F | 9,00 % | | |
| CDU-5-F | 8,00 % | | |
| CCH-3CF₃ | 4,00 % | | |
| CCH-5CF₃ | 4,00 % | | |
| CCPC-34 | 4,00 % | | |

| Beispiel 34 | | | |
|---|---|---|---|
| CCH-301 | 8,00 % | | |
| CCH-501 | 12,00 % | Klärpunkt: | +84,0°C |
| CH-33 | 3,00 % | Δn [589 nm, 20°C]: | +0,0614 |
| CH-35 | 3,00 % | Δε [kHz, 20°C]: | +8,3 |
| CH-43 | 3,00 % | d·Δn [20 °C, µm]: | 0,50 |
| CH-45 | 3,00 % | Verdrillung [°]: | 90 |
| CCP-2F.F.F | 9,00 % | V₁₀[V]: | 1,48 |
| CCZU-2-F | 5,00 % | | |
| CCZU-3-F | 16,00 % | | |
| CCZU-5-F | 6,00 % | | |
| CDU-2-F | 8,00 % | | |
| CDU-3-F | 9,00 % | | |
| CDU-5-F | 4,00 % | | |
| CCH-3CF₃ | 3,00 % | | |
| CCH-5CF₃ | 4,00 % | | |
| CCPC-34 | 4,00 % | | |

| Beispiel 35 | | | |
|---|---|---|---|
| CCH-301 | 13,00% | S → N | < -30,0 °C |
| CCH-35 | 6,00 % | Klärpunkt: | +88,5 °C |
| CCH-3CF₃ | 8,00 % | Δn [589 nm, 20 °C]: | +0,0616 |
| CCP-2F.F.F | 10,00 % | d·Δn [20 °C, µm]: | 0,50 |
| CCP-3F.F.F | 14,00 % | Verdrillung [°]: | 90 |
| CCP-5F.F.F | 6,00 % | V₁₀ [V]: | 1,63 |
| CCZU-2-F | 5,00 % | | |
| CCZU-3-F | 13,00% | | |
| CCZU-4-F | 5,00 % | | |
| CCZU-5-F | 5,00 % | | |
| CH-33 | 4,00% | | |
| CH-35 | 4,00 % | | |
| CH-43 | 3,00 % | | |
| CH-45 | 4,00 % | | |

| Beispiel 36 | | | |
|---|---|---|---|
| CCH-301 | 13,00 % | | |
| CCH-35 | 6,00 % | Klärpunkt: | +83,0 °C |
| PCH-7F | 2,00 % | Δn [589 nm, 20°C]: | +0,0617 |
| CCH-3CF₃ | 8,00 % | d·Δn [20°C, µm]: | 0,50 |
| CCP-2F.F.F | 10,00 % | Verdrillung [°]: | 90 |
| CCP-3F.F.F | 14,00 % | V₁₀[V]: | 1,51 |
| CCP-5F.F.F | 6,00 % | | |
| CCZU-2-F | 5,00 % | | |
| CCZU-3-F | 13,00 % | | |
| CCZU-4-F | 5,00 % | | |
| CCZU-5-F | 5,00 % | | |
| CH-33 | 4,00 % | | |
| CH-35 | 3,00 % | | |
| CH-43 | 3,00 % | | |
| CH-45 | 3,00 % | | |

| Beispiel 37 | | | |
|---|---|---|---|
| CCH-301 | 13,00 % | Klärpunkt: | +102,0°C |
| CCH-35 | 6,00 % | Δn [589 nm, 20 °C]: | +0,0644 |
| PCH-7F | 2,00 % | | |
| CCH-3CF₃ | 8,00 % | | |
| CCZU-2-F | 5,00 % | | |
| CCZU-3-F | 13,00% | | |
| CCZU-4-F | 5,00 % | | |
| CCZU-5-F | 5,00 % | | |
| CCZG-2-OT | 10,00% | | |
| CCZG-3-OT | 14,00 % | | |
| CCZG-5-OT | 6,00 % | | |
| CH-33 | 4,00 % | | |
| CH-35 | 3,00 % | | |
| CH-43 | 3,00 % | | |
| CH-45 | 3,00 % | | |

| Beispiel 38 | | | |
|---|---|---|---|
| CCH-301 | 15,00 % | S → N | < -20°C |
| CCH-35 | 6,00 % | Klärpunkt: | +84,5 °C |
| CCH-3CF₃ | 8,00 % | Δn [589 nm, 20°C]: | +0,0613 |
| CCP-2F.F.F | 10,00 % | d·Δn [20 °C, µm]: | 0,50 |
| CCP-3F.F.F | 14,00 % | Verdrillung [°]: | 90 |
| CCP-5F.F.F | 6,00 % | V₁₀[V]: | 1,58 |
| CCZU-2-F | 5,00 % | | |
| CCZU-3-F | 13,00 % | | |
| CCZU-4-F | 5,00 % | | |
| CCZU-5-F | 5,00 % | | |
| CH-33 | 4,00 % | | |
| CH-35 | 3,00 % | | |
| CH-43 | 3,00 % | | |
| CH-45 | 3,00 % | | |

| Beispiel 39 | | | |
|---|---|---|---|
| CCH-301 | 13,00 % | S → N | <-20°C |
| CCH-35 | 6,00 % | Klärpunkt: | +87,0 °C |
| CCH-3CF₃ | 8,00 % | Δn [589 nm, 20°C]: | +0,0623 |
| CCP-2F.F.F | 10,00 % | d·Δn [20 °C, µm]: | 0,50 |
| CCP-3F.F.F | 14,00 % | Verdrillung [°]: | 90 |
| CCP-5F.F.F | 6,00 % | V₁₀[V]: | 1,62 |
| CCP-4CF₃.F.F | 6,00 % | | |
| CCZU-2-F | 5,00 % | | |
| CCZU-3-F | 7,00 % | | |
| CCZU-4-F | 5,00 % | | |
| CCZU-5-F | 5,00 % | | |
| CH-33 | 4,00 % | | |
| CH-35 | 4,00 % | | |
| CH-43 | 3,00 % | | |
| CH-45 | 4,00 % | | |

| Beispiel 40 | | | |
|---|---|---|---|
| CCH-301 | 15,00% | Klärpunkt: | +85,5°C |
| CCH-3CF₃ | 8,00% | Δn [589 nm, 20°C]: | +0,0612 |
| CC-5-OMT | 6,00 % | d·Δn [20 °C, µm]: | 0,50 |
| CCP-2F.F.F | 10,00 % | Verdrillung [°]: | 90 |
| CCP-3F.F.F | 14,00 % | V₁₀ [V]: | 1,59 |
| CCP-5F.F.F | 6,00% | | |
| CCZU-2-F | 5,00 % | | |
| CCZU-3-F | 13,00 % | | |
| CCZU-5-F | 6,00 % | | |
| CH-33 | 5,00 % | | |
| CH-35 | 4,00 % | | |
| CH-43 | 4,00 % | | |
| CH-45 | 4,00 % | | |

| Beispiel 41 | | | |
|---|---|---|---|
| CCH-301 | 17,00 % | Klärpunkt: | +89,5°C |
| CCH-35 | 6,00 % | Δn [589 nm, 20 °C]: | +0,0617 |
| CCH-3CF₃ | 8,00 % | | |
| CCP-2F.F.F | 5,00 % | | |
| CCP-3F.F.F | 5,00 % | | |
| CCP-5F.F.F | 5,00 % | | |
| CCZU-2-F | 5,00 % | | |
| CCZU-3-F | 13,00 % | | |
| CCZU-4-F | 5,00 % | | |
| CCZU-5-F | 5,00 % | | |
| CCZG-2-OT | 5,00 % | | |
| CCZG-3-OT | 5,00 % | | |
| CCZG-5-OT | 5,00 % | | |
| CH-33 | 3,00 % | | |
| CH-35 | 3,00 % | | |
| CH-43 | 3,00 % | | |
| CH-45 | 2,00 % | | |

| Beispiel 42 | | | |
|---|---|---|---|
| CCH-301 | 14,00 % | Klärpunkt: | +85,5°C |
| CCH-35 | 11,00% | Δn [589 nm, 20°C]: | +0,0601 |
| CCH-3CF₃ | 8,00 % | | |
| CCP-2F.F.F | 5,00 % | | |
| CCP-3F.F.F | 10,00% | | |
| CCP-5F.F.F | 6,00 % | | |
| CCZU-2-F | 5,00 % | | |
| CCZU-3-F | 18,00 % | | |
| CCZU-4-F | 8,00 % | | |
| CCZU-5-F | 5,00 % | | |
| CH-33 | 3,00 % | | |
| CH-35 | 3,00 % | | |
| CH-43 | 2,00% | | |
| CH-45 | 2,00 % | | |

| Beispiel 43 | | | |
|---|---|---|---|
| CCH-301 | 15,00 % | Klärpunkt: | +86,0°C |
| CCH-35 | 10,00 % | Δn [589 nm, 20°C]: | +0,0605 |
| CCH-3CF₃ | 8,00 % | d·Δn [20 °C, µm]: | 0,50 |
| CCP-2F.F.F | 7,00 % | Verdrillung [°]: | 90 |
| CCP-3F.F.F | 13,00 % | V₁₀[V]: | 1,70 |
| CCP-5F.F.F | 6,00 % | | |
| CCZU-2-F | 5,00 % | | |
| CCZU-3-F | 13,00 % | | |
| CCZU-4-F | 5,00 % | | |
| CCZU-5-F | 5,00 % | | |
| CH-33 | 4,00 % | | |
| CH-35 | 3,00 % | | |
| CH-43 | 3,00 % | | |
| CH-45 | 3,00 % | | |

| Beispiel 44 | | | |
|---|---|---|---|
| CCH-301 | 13,00% | Klärpunkt: | +86,0°C |
| CCH-35 | 6,00 % | Δn [589 nm, 20°C]: | +0,0615 |
| CCH-3CF₃ | 8,00 % | d·Δn [20 °C, µm]: | 0,50 |
| CCP-2F.F.F | 13,00 % | Verdrillung [°]: | 90 |
| CCP-3F.F.F | 17,00% | V₁₀[V]: | 1,67 |
| CCP-5F.F.F | 8,00 % | | |
| CCZU-2-F | 5,00 % | | |
| CCZU-3-F | 10,00 % | | |
| CCZU-5-F | 5,00 % | | |
| CH-33 | 4,00 % | | |
| CH-35 | 4,00 % | | |
| CH-43 | 3,00% | | |
| CH-45 | 4,00 % | | |

| Beispiel 45 | | | |
|---|---|---|---|
| CCH-301 | 12,00 % | Klärpunkt: | +84,0 °C |
| CCH-35 | 10,00 % | Δn [589 nm, 20 °C]: | +0,0602 |
| CCH-3CF₃ | 11,00 % | d·Δn [20°C, µm]: | 0,50 |
| CCP-2F.F.F | 9,00 % | Verdrillung [°]: | 90 |
| CCP-3F.F.F | 12,00 % | V₁₀[V]: | 1,66 |
| CCP-5F.F.F | 5,00 % | | |
| CCZU-2-F | 5,00 % | | |
| CCZU-3-F | 13,00 % | | |
| CCZU-4-F | 5,00 % | | |
| CCZU-5-F | 5,00 % | | |
| CH-33 | 4,00 % | | |
| CH-35 | 3,00 % | | |
| CH-43 | 3,00% | | |
| CH-45 | 3,00 % | | |

| Beispiel 46 | | | |
|---|---|---|---|
| CCH-301 | 17,00% | Klärpunkt: | +73,5°C |
| CCH-35 | 10,00% | Δn [589 nm, 20°C]: | +0,0585 |
| CCH-3CF₃ | 11,00% | d·Δn [20 °C, µm]: | 0,50 |
| CCP-2F.F.F | 9,00 % | Verdrillung [°]: | 90 |
| CCP-3F.F.F | 12,00% | V₁₀ [V]: | 1,59 |
| CCP-5F.F.F | 5,00 % | | |
| CCZU-2-F | 5,00 % | | |
| CCZU-3-F | 13,00 % | | |
| CCZU-4-F | 5,00 % | | |
| CCZU-5-F | 5,00 % | | |
| CH-33 | 3,00 % | | |
| CH-35 | 3,00 % | | |
| CH-43 | 2,00 % | | |

| Beispiel 47 | | | |
|---|---|---|---|
| CCH-301 | 14,00% | S → N | < -40°C |
| CCH-34 | 4,00 % | Klärpunkt: | +78,0°C |
| CC-5-V | 5,00 % | Δn [589 nm, 20 °C]: | +0,0601 |
| CCP-2F.F.F | 10,00% | Δε [kHz, 20°C]: | 6,6 |
| CCP-3F.F.F | 12,00% | d·Δn [20 °C, µm]: | 0,50 |
| CCP-5F.F.F | 6,00 % | Verdrillung [°]: | 90 |
| CCZU-2-F | 5,00 % | V₁₀[V]: | 1,62 |
| CCZU-3-F | 16,00 % | | |
| CCZU-5-F | 5,00 % | | |
| CCP-20CF₃.F | 2,00 % | | |
| CCH-3CF₃ | 10,00 % | | |
| CH-33 | 3,00 % | | |
| CH-35 | 3,00 % | | |
| CH-43 | 3,00 % | | |
| CH-45 | 2,00 % | | |

| Beispiel 48 | | | |
|---|---|---|---|
| CCH-301 | 12,00 % | Klärpunkt: | +85,0 °C |
| CCH-35 | 10,00 % | Δn [589 nm, 20°C]: | +0,0602 |
| CCH-3CF₃ | 6,00 % | d·Δn [20 °C, µm]: | 0,50 |
| CCH-5CF₃ | 5,00 % | Verdrillung [°]: | 90 |
| CCP-2F.F.F | 9,00 % | V₁₀[V]: | 1,72 |
| CCP-3F.F.F | 12,00 % | | |
| CCP-5F.F.F | 5,00 % | | |
| CCZU-2-F | 5,00 % | | |
| CCZU-3-F | 13,00 % | | |
| CCZU-4-F | 5,00 % | | |
| CCZU-5-F | 5,00 % | | |
| CH-33 | 4,00 % | | |
| CH-35 | 3,00 % | | |
| CH-43 | 3,00 % | | |
| CH-45 | 3,00 % | | |

| Beispiel 49 | | | |
|---|---|---|---|
| CCH-301 | 8,00 % | Klärpunkt: | +83,5 °C |
| CCH-501 | 5,00 % | Δn [589 nm, 20°C]: | +0,0603 |
| CCH-35 | 7,00 % | Δε [kHz, 20°C]: | +7,3 |
| CC-5-V | 3,00 % | d·Δn [20 °C, µm]: | 0,50 |
| CCH-3CF₃ | 6,00 % | Verdrillung [°]: | 90 |
| CCH-5CF₃ | 5,00 % | V₁₀ [V]: | 1,72 |
| CCP-2F.F.F | 7,00 % | | |
| CCP-3F.F.F | 8,00 % | | |
| CCP-4F.F.F | 6,00 % | | |
| CCP-5F.F.F | 5,00 % | | |
| CCZU-2-F | 5,00 % | | |
| CCZU-3-F | 8,00 % | | |
| CCZU-4-F | 5,00 % | | |
| CCZU-5-F | 5,00 % | | |
| CCZG-2-OT | 5,00 % | | |
| CH-33 | 3,00 % | | |
| CH-35 | 3,00 % | | |
| CH-43 | 3,00 % | | |
| CH-45 | 3,00 % | | |

| Beispiel 50 | | | |
|---|---|---|---|
| CCH-301 | 5,00 % | S → N | < -30°C |
| CH-33 | 3,00 % | Klärpunkt: | +68,0 °C |
| CH-35 | 3,00 % | Δn [589 nm, 20°C]: | +0,0602 |
| CCP-2F.F.F | 6,00 % | Δε [kHz, 20°C]: | +10,3 |
| CCZU-2-F | 6,00 % | γ₁ [mPa·s, 20 °C]: | 161 |
| CCZU-3-F | 16,00 % | d·Δn [20 °C, µm]: | 0,50 |
| CCZU-5-F | 6,00 % | Verdrillung [°]: | 90 |
| CDU-2-F | 10,00% | V₁₀ [V]: | 1,22 |
| CDU-3-F | 12,00 % | | |
| CDU-5-F | 8,00 % | | |
| CCH-3CF₃ | 9,00 % | | |
| CCH-5CF₃ | 12,00 % | | |
| CCPC-34 | 4,00 % | | |

| Beispiel 51 | | | |
|---|---|---|---|
| CH-33 | 4,00 % | Klärpunkt: | +74,0 °C |
| CCP-2F.F.F | 10,00 % | Δn [589 nm, 20°C]: | +0,0631 |
| CCP-3F.F.F | 2,00 % | d·Δn [20 °C, µm]: | 0,50 |
| CCZU-2-F | 6,00 % | Verdrillung [°]: | 90 |
| CCZU-3-F | 16,00 % | V₁₀[V]: | 1,21 |
| CCZU-5-F | 6,00 % | | |
| CDU-2-F | 10,00 % | | |
| CDU-3-F | 12,00 % | | |
| CDU-5-F | 8,00 % | | |
| CCH-3CF₃ | 9,00 % | | |
| CCH-5CF₃ | 12,00 % | | |
| CCPC-33 | 2,00 % | | |
| CCPC-34 | 3,00 % | | |

| Beispiel 52 | | | |
|---|---|---|---|
| CH-33 | 4,00 % | Klärpunkt: | +69,0°C |
| CCP-2F.F.F | 10,00% | Δn [589 nm, 20°C]: | +0,0625 |
| CCP-3F.F.F | 4,00 % | d·Δn [20 °C, µm]: | 0,50 |
| CCZU-2-F | 6,00 % | Verdrillung [°]: | 90 |
| CCZU-3-F | 16,00% | V₁₀[V]: | 1,16 |
| CCZU-5-F | 6,00 % | | |
| CDU-2-F | 9,00 % | | |
| CDU-3-F | 11,00 % | | |
| CDU-5-F | 7,00 % | | |
| CCH-3CF₃ | 10,00 % | | |
| CCH-5CF₃ | 12,00 % | | |
| CCPC-33 | 2,00 % | | |
| CCPC-34 | 3,00 % | | |

| Beispiel 53 | | | |
|---|---|---|---|
| CCH-34 | 6,00 % | S → N | < -40°C |
| CCH-3CF₃ | 3,00 % | Klärpunkt: | +75,0 °C |
| CCH-5CF₃ | 8,00 % | Δn [589 nm, 20 °C]: | +0,0644 |
| CCP-2F.F.F | 11,00 % | Δε [kHz, 20 °C]: | +10,1 |
| CCP-3F.F.F | 10,00 % | d·Δn [20 °C, µm]: | 0,50 |
| CCP-5F.F.F | 6,00 % | Verdrillung [°]: | 90 |
| CCP-20CF₃.F | 4,00 % | V₁₀[V]: | 1,34 |
| CCP-40CF₃ | 8,00 % | | |
| CDU-2-F | 10,00 % | | |
| CDU-3-F | 12,00% | | |
| CDU-5-F | 10,00 % | | |
| CCOC-3-3 | 4,00 % | | |
| CCOC-4-3 | 8,00 % | | |

| Beispiel 54 | | | |
|---|---|---|---|
| CCH-34 | 5,00 % | Klärpunkt: | +80,0 °C |
| CC-5-V | 8,00 % | Δn [589 nm, 20°C]: | +0,0642 |
| CCH-3CF₃ | 6,00 % | Δε [kHz, 20 °C]: | +7,8 |
| CCH-5CF₃ | 8,00 % | d·Δn [20°C, µm]: | 0,50 |
| CCP-2F.F.F | 11,00 % | Verdrillung [°]: | 90 |
| CCP-3F.F.F | 11,00 % | V₁₀ [V]: | 1,58 |
| CCP-5F.F.F | 6,00 % | | |
| CCZU-2-F | 6,00 % | | |
| CCZU-3-F | 14,00 % | | |
| CCZU-5-F | 6,00 % | | |
| CCP-20CF₃.F | 8,00 % | | |
| CCP-40CF₃ | 4,00 % | | |
| CCOC-4-3 | 5,00% | | |
| CCOC-3-3 | 2,00 % | | |

| Beispiel 55 | | | |
|---|---|---|---|
| CCH-34 | 5,00 % | S → N | < -40 °C |
| CC-5-V | 8,00 % | Klärpunkt: | +80,5 °C |
| CCH-3CF₃ | 6,00% | Δn [589 nm, 20 °C]: | +0,0643 |
| CCH-5CF₃ | 8,00 % | Δε [kHz, 20 °C]: | +7,8 |
| CCP-2F.F.F | 11,00 % | d·Δn [20 °C, µm]: | 0,50 |
| CCP-3F.F.F | 11,00 % | Verdrillung [°]: | 90 |
| CCP-5F.F.F | 6,00 % | V₁₀ [V]: | 1,59 |
| CCZU-2-F | 5,00 % | | |
| CCZU-3-F | 15,00 % | | |
| CCZU-5-F | 5,00 % | | |
| CCP-20CF₃.F | 8,00 % | | |
| CCP-40CF₃ | 5,00 % | | |
| CCOC-4-3 | 5,00 % | | |
| CCOC-3-3 | 2,00 % | | |

| Beispiel 56 | | | |
|---|---|---|---|
| CCH-34 | 5,00 % | S → N | < -40 °C |
| CC-5-V | 6,00% | Klärpunkt: | +80,0 °C |
| CCH-3CF₃ | 6,00 % | Δn [589 nm, 20 °C]: | +0,0648 |
| CCH-5CF₃ | 6,00% | Δε [kHz, 20°C]: | +8,0 |
| CCP-2F.F.F | 12,00 % | d·Δn [20 °C, µm]: | 0,50 |
| CCP-3F.F.F | 11,00 % | Verdrillung [°]: | 90 |
| CCP-5F.F.F | 6,00 % | V₁₀[V]: | 1,54 |
| CCP-20CF₃.F | 8,00 % | | |
| CCP-50CF₃.F | 8,00 % | | |
| CCP-40CF₃ | 6,00 % | | |
| CDU-2-F | 6,00 % | | |
| CDU-3-F | 8,00 % | | |
| CCOC-3-3 | 4,00 % | | |
| CCOC-4-3 | 8,00 % | | |

| Beispiel 57 | | | |
|---|---|---|---|
| CCH-34 | 5,00 % | S → N | < -40 °C |
| CC-5-V | 6,00 % | Klärpunkt: | +80,5°C |
| CCH-3CF₃ | 6,00 % | Δε [kHz, 20 °C]: | +7,9 |
| CCH-5CF₃ | 8,00 % | γ₁ [mPa·s, 20 °C]: | 124 |
| CCP-2F.F.F | 11,00 % | d·Δn [20°C, µm]: | 0,50 |
| CCP-3F.F.F | 12,00 % | Verdrillung [°]: | 90 |
| CCP-5F.F.F | 5,00 % | V₁₀ [V]: | 1,56 |
| CCZU-2-F | 5,00 % | | |
| CCZU-3-F | 15,00 % | | |
| CCZU-5-F | 4,00 % | | |
| CCP-20CF₃.F | 10,50% | | |
| CCP-40CF₃ | 6,50% | | |
| CCOC-4-3 | 4,00% | | |
| CCOC-3-3 | 2,00 % | | |

| Beispiel 58 | | | |
|---|---|---|---|
| CCH-301 | 10,00% | S → N | < -40°C |
| CCH-501 | 9,00 % | Klärpunkt: | +95,5 °C |
| CCH-35 | 5,00 % | Δn [589 nm, 20 °C]: | +0,0608 |
| C C-5-V | 12,00% | V₁₀ [V]: | 2,32 |
| CC-3-V1 | 5,00 % | d·Δn [20°C, µm]: | 0,50 |
| CCH-3CF₃ | 4,00 % | Verdrillung [°]: | 90 |
| CCH-5CF₃ | 5,00 % | | |
| CCP-2F.F.F | 6,00 % | | |
| CDU-2-F | 6,00 % | | |
| CDU-3-F | 8,00 % | | |
| CCZU-3-F | 7,00 % | | |
| CCPC-33 | 4,00 % | | |
| CCPC-34 | 5,00 % | | |
| CCPC-35 | 4,00 % | | |
| CCOC-3-3 | 3,00 % | | |
| CCOC-4-3 | 5,00 % | | |
| CCOC-3-5 | 2,00 % | | |

| Beispiel 59 | | | |
|---|---|---|---|
| CCH-301 | 10,00 % | S → N | < -40°C |
| CCH-501 | 8,00% | Klärpunkt: | +95,0°C |
| CCH-35 | 5,00 % | Δn [589 nm, 20°C]: | +0,0607 |
| CC-5-V | 15,00% | d·Δn [20°C, µm]: | 0,50 |
| CC-3-V1 | 4,00 % | Verdrillung [°]: | 90 |
| CCH-3CF₃ | 4,00 % | V₁₀[V]: | 2,32 |
| CCH-5CF₃ | 4,00 % | | |
| CCP-2F.F.F | 7,00 % | | |
| CDU-2-F | 7,00 % | | |
| CDU-3-F | 7,00 % | | |
| CCZU-3-F | 6,00 % | | |
| CCPC-33 | 4,00 % | | |
| CCPC-34 | 5,00 % | | |
| CCPC-35 | 4,00 % | | |
| CCOC-3-3 | 3,00 % | | |
| CCOC-4-3 | 5,00 % | | |
| CCOC-3-5 | 2,00 % | | |

| Beispiel 60 | | | |
|---|---|---|---|
| CCH-301 | 10,00 % | S → N | < -40°C |
| CCH-501 | 11,00 % | Klärpunkt: | +95,5°C |
| CCH-35 | 5,00 % | Δn [589 nm, 20 °C]: | +0,0609 |
| CC-5-V | 9,00 % | d·Δn [20 °C, µm]: | 0,50 |
| CCH-3CF₃ | 4,00 % | Verdrillung [°]: | 90 |
| CCH-5CF₃ | 6,00 % | V₁₀ [V]: | 2,27 |
| CCP-2F.F.F | 6,00 % | | |
| CDU-2-F | 6,00 % | | |
| CDU-3-F | 8,00 % | | |
| CCZU-3-F | 7,00 % | | |
| CCOC-3-3 | 3,00 % | | |
| CCOC-4-3 | 5,00 % | | |
| CCOC-3-5 | 2,00 % | | |
| CCGC-3-3 | 2,00 % | | |
| CCGC-3-5 | 3,00 % | | |
| CGCC-2-3 | 5,00 % | | |
| CGCC-2-5 | 5,00 % | | |
| CH-43 | 3,00 % | | |

| Beispiel 61 | | | |
|---|---|---|---|
| CCH-35 | 5,00 % | Klärpunkt: | +95,0°C |
| CC-3-V1 | 10.00% | Δn [589 nm, 20°C]: | +0,0641 |
| CC-5-V | 18,00 % | V₁₀[V]: | 2,34 |
| CCH-3CF₃ | 8,00 % | d·Δn [20 °C, µm]: | 0,50 |
| CCH-5CF₃ | 10,00 % | Verdrillung [°]: | 90 |
| CCP-2F.F.F | 6,00 % | | |
| CDU-2-F | 8,00 % | | |
| CDU-3-F | 10,00% | | |
| CGCC-2-3 | 5,00 % | | |
| CGCC-2-5 | 4,00 % | | |
| CCGC-3-2 | 5,00 % | | |
| CCGC-3-5 | 3,00 % | | |
| CCOC-3-3 | 3,00 % | | |
| CCOC-4-3 | 5,00 % | | |

| Beispiel 62 | | | |
|---|---|---|---|
| CCH-301 | 9,00 % | S → N | < -40°C |
| CCH-501 | 10,00 % | Klärpunkt: | +96,0 °C |
| CCH-35 | 5,00 % | Δn [589 nm, 20°C]: | +0,0615 |
| CC-5-V | 9,00 % | V₁₀[V]: | 2,25 |
| CCH-3CF₃ | 3,00 % | d·Δn [20°C, µm]: | 0,50 |
| CCH-5CF₃ | 8,00% | Verdrillung [°]: | 90 |
| CCP-2F.F.F | 8,00 % | | |
| CDU-2-F | 8,00 % | | |
| CDU-3-F | 10,00% | | |
| CCOC-3-3 | 3,00 % | | |
| CCOC-4-3 | 5,00 % | | |
| CCOC-3-5 | 2,00 % | | |
| CCGC-3-2 | 4,00 % | | |
| CCGC-3-5 | 3,00 % | | |
| CGCC-2-3 | 5,00 % | | |
| CGCC-2-5 | 5,00 % | | |
| CH-43 | 3,00 % | | |

| Beispiel 63 | | | |
|---|---|---|---|
| CCH-301 | 9,00 % | S → N | <-40°C |
| CCH-501 | 9,00 % | Klärpunkt: | +95,0°C |
| CCH-35 | 5,00 % | Δn [589 nm, 20°C]: | +0,0608 |
| CC-5-V | 14,00 % | V₁₀ [V]: | 2,26 |
| CC-3-V1 | 3,00 % | d·Δn [20°C, µm]: | 0,50 |
| CCH-3CF₃ | 4,00 % | Verdrillung [°]: | 90 |
| CCH-5CF₃ | 5,00 % | | |
| CCP-2F.F.F | 5,00 % | | |
| CDU-2-F | 6,00 % | | |
| CDU-3-F | 7,00 % | | |
| CCZU-3-F | 8,50 % | | |
| CCZU-5-F | 3,00 % | | |
| CCPC-33 | 4,00 % | | |
| CCPC-34 | 4,00 % | | |
| CCPC-35 | 4,00 % | | |
| CCOC-3-3 | 3,00% | | |
| CCOC-4-3 | 4,50 % | | |
| CCOC-3-5 | 2,00 % | | |

| Beispiel 64 | | | |
|---|---|---|---|
| CCH-3CF₃ | 7,00 % | Klärpunkt: | +83,0 °C |
| CCH-5CF₃ | 7,00 % | Δn [589 nm, 20°C]: | +0,0639 |
| CCH-301 | 8,00 % | V₁₀ [V]: | 1,38 |
| CCP-2F.F.F | 6,00 % | d·Δn [20°C, µm]: | 0,50 |
| CCP-3F.F.F | 6,00 % | Verdrillung [°]: | 90 |
| CCP-4F.F.F | 5,00 % | | |
| CCP-5F.F.F | 6,00 % | | |
| CCZU-2-F | 8,00 % | | |
| CCZU-3-F | 10,00 % | | |
| CCZU-4-F | 9,00 % | | |
| CCZU-5-F | 8,00 % | | |
| CCZG-3-OT | 5,00 % | | |
| CCZG-5-OT | 5,00 % | | |
| CCZG-2-OT | 5,00 % | | |
| CH-33 | 3,00 % | | |
| CH-35 | 2,00 % | | |

| Beispiel 65 | | | |
|---|---|---|---|
| CCH-3CF₃ | 4,00 % | Klärpunkt: | +80,5 °C |
| CCH-5CF₃ | 4,00 % | Δn [589 nm, 20 °C]: | +0,0641 |
| CCH-301 | 10,00 % | V₁₀ [V]: | 1,39 |
| CCH-501 | 10,00 % | d·Δn [20°C, µm]: | 0,50 |
| CCP-2F.F.F | 9,00 % | Verdrillung [°]: | 90 |
| CCP-3F.F.F | 6,00 % | | |
| CCZU-3-F | 15,00 % | | |
| CCZU-5-F | 6,00 % | | |
| CDU-2-F | 10,00 % | | |
| CDU-3-F | 9,00 % | | |
| CDU-5-F | 7,00 % | | |
| CCPC-33 | 5,00 % | | |
| CCPC-35 | 5,00 % | | |

| Beispiel 66 | | | |
|---|---|---|---|
| CCH-3CF₃ | 4,00 % | Klärpunkt: | +75,0°C |
| CCH-5CF₃ | 4,00 % | Δn [589 nm, 20°C]: | +0,0633 |
| CCH-301 | 10,00 % | V₁₀ [V]: | 1,34 |
| CCH-501 | 10,00% | d·Δn [20 °C, µm]: | 0,50 |
| CCP-2F.F.F | 9,00% | Verdrillung [°]: | 90 |
| CCP-3F.F.F | 6,00 % | | |
| CCZU-3-F | 15,00 % | | |
| CCZU-5-F | 6,00 % | | |
| CDU-2-F | 10,00 % | | |
| CDU-3-F | 9,00 % | | |
| CDU-5-F | 7,00 % | | |
| CPCC-2-2 | 5,00 % | | |
| CPCC-2-3 | 5,00 % | | |

| Beispiel 67 | | | |
|---|---|---|---|
| CCH-301 | 4,00 % | S → N | <-40°C |
| CCH-501 | 5,50 % | Klärpunkt: | +88,0 °C |
| CCP-2F.F.F | 10,00% | Δn [589 nm, 20 °C]: | +0,0650 |
| CCP-3F.F.F | 12.00% | Δε [kHz, 20°C]: | +8,2 |
| CCP-5F.F.F | 5,00 % | d·Δn [20 °C, µm]: | 0,50 |
| CCZU-2-F | 4,00 % | Verdrillung [°]: | 90 |
| CCZU-3-F | 17,00 % | V₁₀[V]: | 1,52 |
| CCZU-5-F | 4,00 % | | |
| CCP-20CF₂.F.F | 3,00 % | | |
| CCP-30CF₂.F.F | 7,00 % | | |
| CCP-50CF₂.F.F | 7,00 % | | |
| CH-33 | 3,50 % | | |
| CH-35 | 3,00 % | | |
| CH-43 | 4,00% | | |
| CCH-3CF₃ | 6,00% | | |
| CCH-5CF₃ | 5,00 % | | |

| Beispiel 68 | | | |
|---|---|---|---|
| CCH-301 | 12,00 % | S → N | < -30°C |
| CCH-501 | 8,00 % | Klärpunkt: | +80,0 °C |
| CC-5-V | 8,00 % | Δn [589 nm, 20 °C]: | +0,0606 |
| CCP-2F.F.F | 10,00 % | Δε [kHz, 20°C]: | +6,3 |
| CCP-3F.F.F | 12,00 % | | |
| CCP-5F.F.F | 5,00 % | | |
| CCZU-2-F | 5,00 % | | |
| CCzU-3-F | 17,00 % | | |
| CCZU-5-F | 5,00 % | | |
| CH-33 | 3,00 % | | |
| CH-35 | 3,00 % | | |
| CH-43 | 3,00 % | | |
| CCH-3CF₃ | 7,00 % | | |
| CCPC-33 | 2,00 % | | |

## Patentansprüche

1. Flüssigkristallines Medium auf der Basis eines Gemisches von polaren Verbindungen mit positiver dielektrischer Anisotropie und einer optischen Anisotropie von ≤ 0,07, dadurch gekennnzeichnet, daß es eine oder mehrere Verbindungen der allgemeinen Formel I 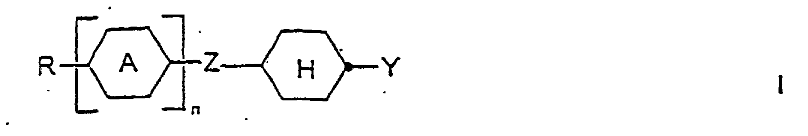 und eine oder.mehrere Ester-Verbindungen der Formeln E1 bis E4 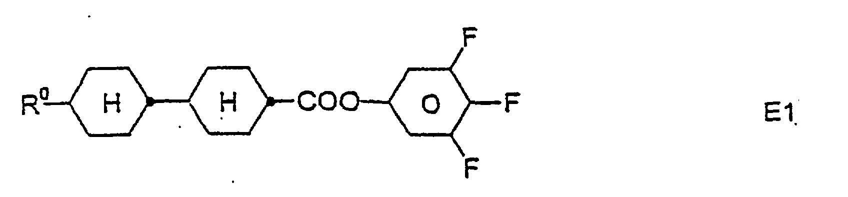 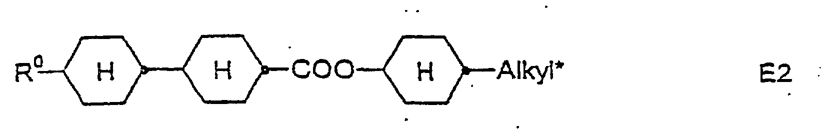 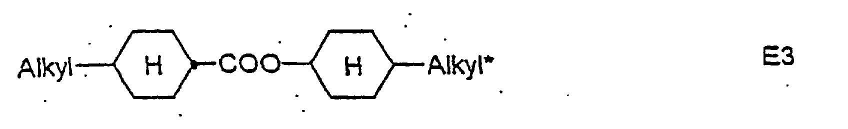 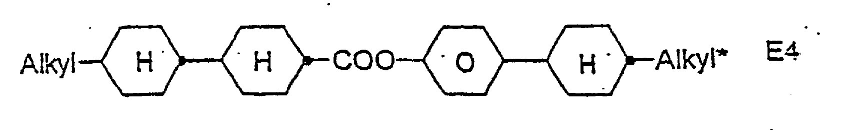 enthält,
worin
R H, einen unsubstituierten, einen einfach durch CN oder CF₃ oder einen mindestens einfach durch Halogen substituierten Alkyl- oder Alkenylrest mit 1 bis 15 C-Atomen, wobei in diesen Resten auch eine oder mehrere CH₂-Gruppen jeweils unabhängig voneinander durch -O-, -S-, 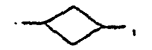 -CO-, -CO-O-, -O-COoder -O-CO-O- so ersetzt sein können, daß O-Atome nicht direkt miteinander verknüpft sind, 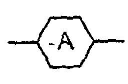
trans-1,4-Cyclohexylenring, worin auch ein oder zwei CH₂-Gruppen durch -O- und/oder -S- ersetzt sein können, oder einen Cyclohexenylenring,
Y halogeniertes Alkyl, halogeniertes Alkenyl, halogeniertes Alkoxy oder halogeniertes Alkenyloxy mit bis zu 6 C-Atomen,
Z -CH₂O-, -OCH₂-, -CH₂CH₂-, -CH=CH-, -CF₂O-, -OCF₂-, -COO-, -C₂F₄- oder eine -Einfachbindung, und
n 1 oder 2
R⁰ n-Alkyl, Oxaalkyl, Fluoralkyl oder Alkenyl mit jeweils bis zu 7 C-Atomen,
Alkyl geradkettige und verzweigte Alkylketten mit 1 bis 7 C-Atomen,
Alkyl* geradkettige und verzweigte Alkylketten mit 1 bis 7 C-Atomen
bedeuten.

2. Medium nach Anspruch 1, **dadurch gekennzeichnet, daß** es zusätzlich eine oder mehrere Verbindungen ausgewählt aus der Gruppe bestehend aus den allgemeinen Formeln II bis VIII enthält: 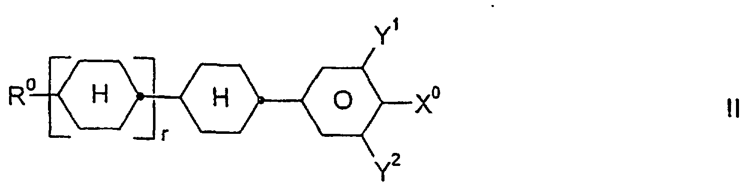 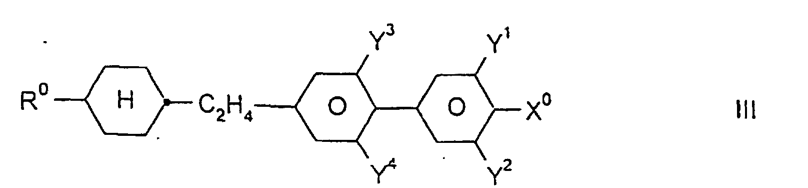 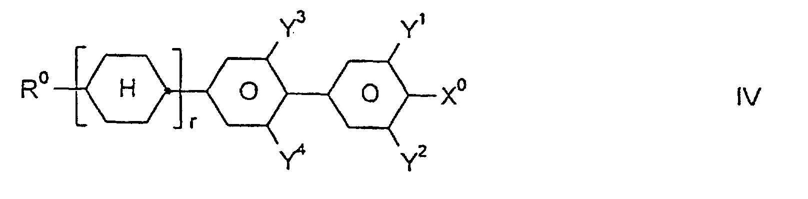 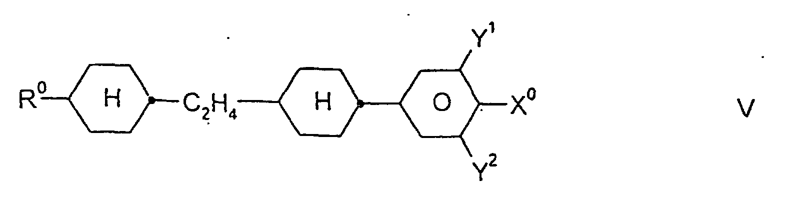 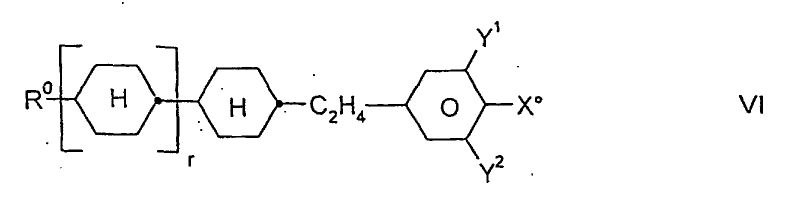 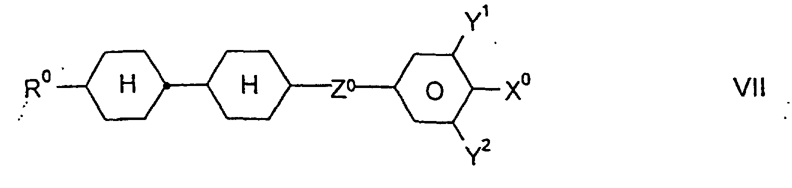 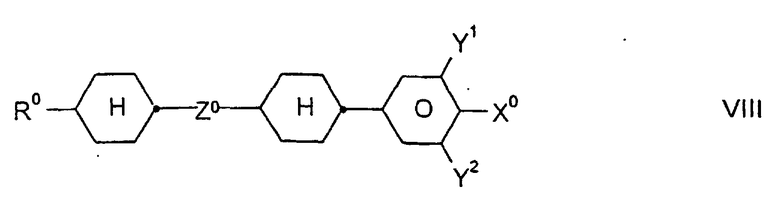 worin die einzelnen Reste die folgenden Bedeutungen haben:
R⁰: n-Alkyl, Oxaalkyl, Fluoralkyl oder Alkenyl mit jeweils bis zu 7 C-Atomen,
X⁰: F, Cl, halogeniertes Alkyl, Alkenyl oder Alkoxy mit 1 bis 6 C-Atomen,
Z⁰: -C₄H₈-, -CF₂O-, -OCF₂-, -C₂F₄-, -CH₂O-, -OCH₂- oder -COO-,
Y¹, Y², Y³ und Y⁴: jeweils unabhängig voneinander H oder F,
r: 0 oder 1.

3. Medium nach Anspruch 2, **dadurch gekennzeichnet, daß** der Anteil an Verbindungen der Formeln I bis VIII zusammen im Gesamtgemisch mindestens 50 Gew.-% beträgt.

4. Medium nach Anspruch 1 oder 2, **dadurch gekennzeichnet, daß** der Anteil an Verbindungen der Formel I im Gesamtgemisch 5 bis 50 Gew.-% beträgt.

5. Medium nach mindestens einem der Ansprüche 2 bis 3, **dadurch gekennzeichnet, daß** der Anteil an Verbindungen der Formeln II bis VIII im Gesamtgemisch 20 bis 80 Gew.-% beträgt.

6. Medium nach Anspruch 1, **dadurch gekennzeichnet, daß** es zusätzlich ein oder mehrere Verbindungen der Formel 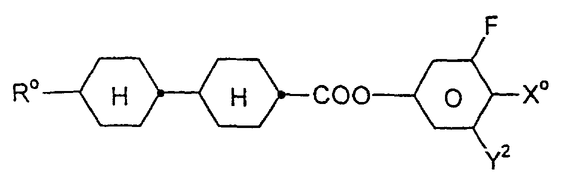 enthält,
worin R⁰, X⁰ und Y² die in Anspruch 2 angegebene Bedeutung haben.

7. Medium nach Anspruch 2 oder Anspruch 6, **dadurch gekennzeichnet, daß** X⁰ F oder OCF₃ und Y² H oder F bedeuten.

8. Medium nach einem der Ansprüche 1 bis 7, **dadurch gekennzeichnet, daß** in der Verbindung der Formel I Y OCF₃ oder CF₃ bedeutet.

9. Medium nach einem der Ansprüche 1 bis 8, **dadurch gekennzeichnet, daß** die Verbindung der Formel I ausgewählt ist aus der Gruppe der Verbindungen la bis In: 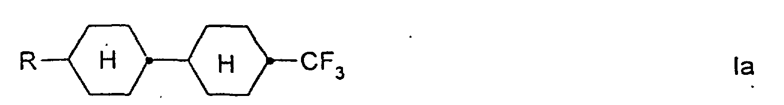 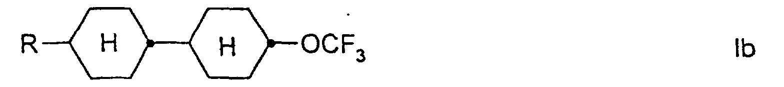 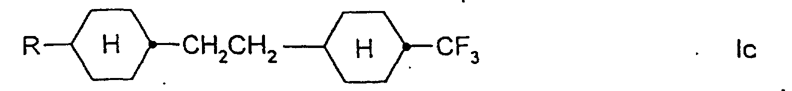 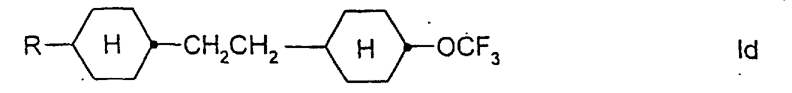 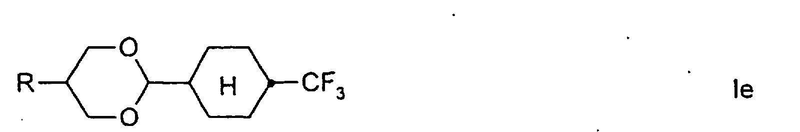 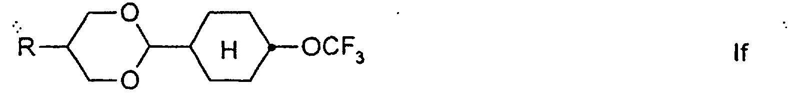 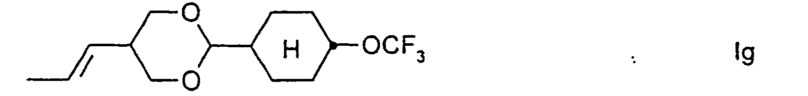 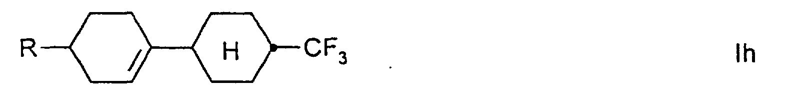 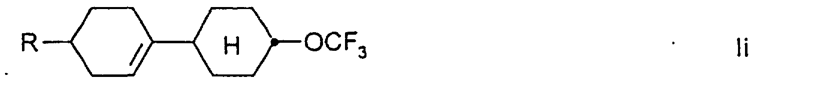 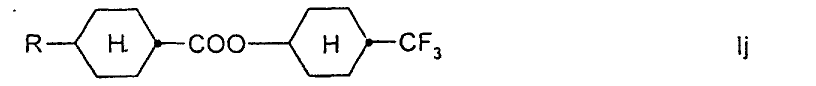 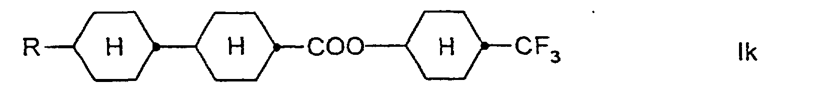 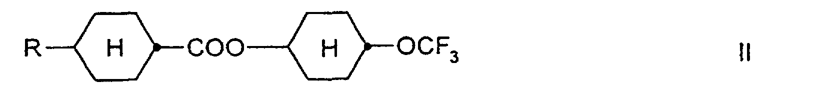 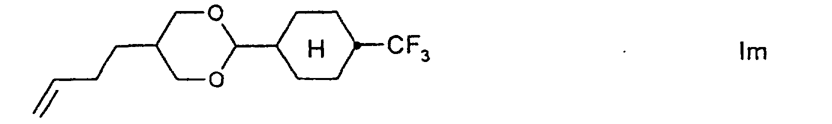 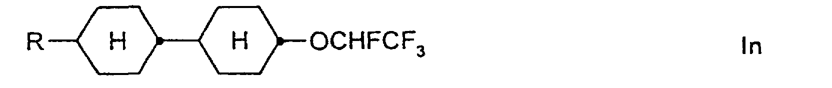 worin R die in Anspruch 1 angegebene Bedeutung hat.

10. Verwendung des flüssigkristallinen Mediums nach Anspruch 1 für elektrooptische Zwecke.

11. Elektrooptische Flüssigkristallanzeige enthaltend ein flüssigkristallines Medium nach Anspruch 1.

## Claims

1. Liquid-crystalline medium based on a mixture of polar compounds having positive dielectric anisotropy and an optical anisotropy of ≤0.07, **characterised in that** it comprises one or more compounds of the general formula I 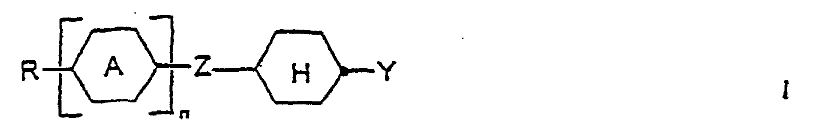 and one or more ester compounds of the formulae E1 to E4 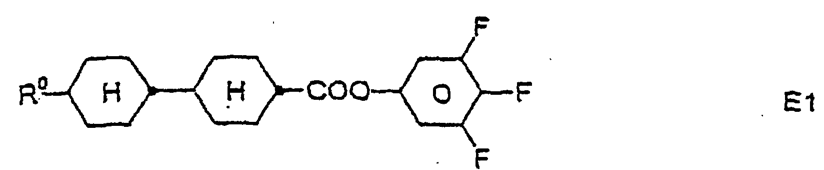 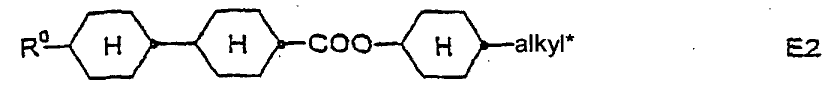 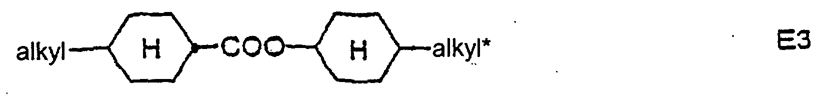 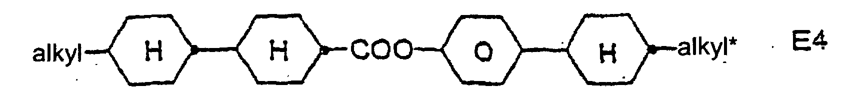 in which
R denotes H, an alkyl or alkenyl radical having 1 to 15 C atoms which is unsubstituted, monosubstituted by CN or CF₃ or at least monosubstituted by halogen, where, in addition, one or more CH₂ groups in these radicals may each, independently of one another, be replaced by -O-, -S-, 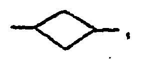 - CO-, -CO-O-, -O-CO- or -O-CO-O- in such a way that O atoms are not linked directly to one another, 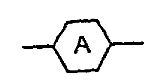
denotes a trans- 1,4-cyclohexylene ring, in which, in addition, one or two CH₂ groups may be replaced by - O- and/or -S-, or a cyclohexenylene ring,
Y denotes halogenated alkyl, halogenated alkenyl, halo-genated alkoxy or halogenated alkenyloxy having up to 6 C atoms,
Z denotes -CH₂O-, -OCH₂-, -CH₂CH₂-, -CH=CH-, -CF₂O-, -OCF₂-, -COO-, -C₂F₄- or a single bond, and
n denotes 1 or 2
R⁰ denotes n-alkyl, oxaalkyl, fluoroalkyl or alkenyl, each having up to 7 C atoms,
alkyl denotes straight-chain or branched alkyl chains having 1 to 7 C atoms,
alkyl* denotes straight-chain or branched alkyl chains having 1 to 7 C atoms.

2. Medium according to Claim 1, **characterised in that** it additionally comprises one or more compounds selected from the group consisting of the general formulae II to VIII: 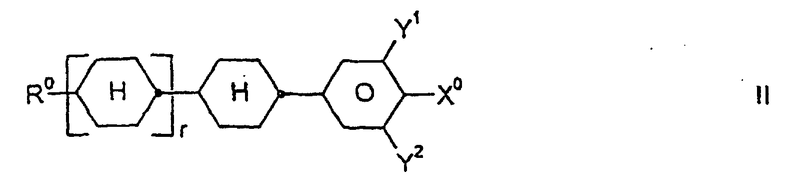 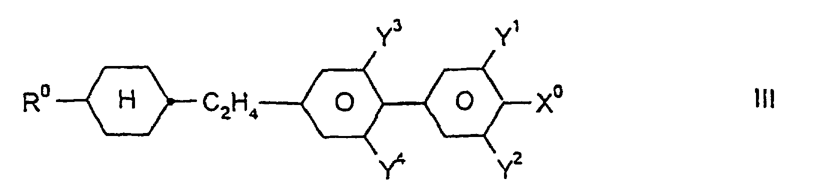 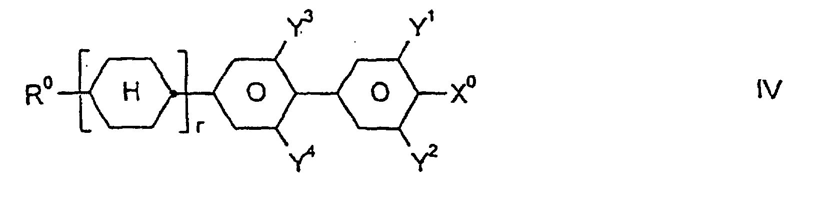 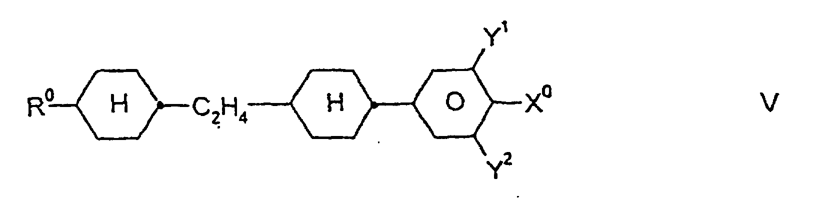 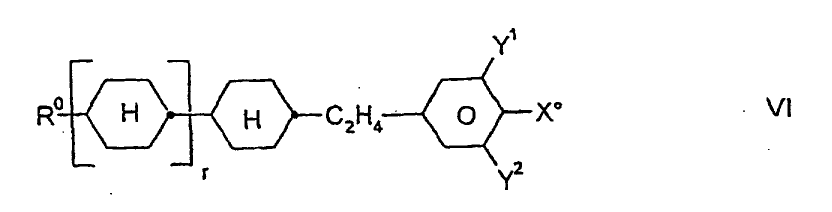 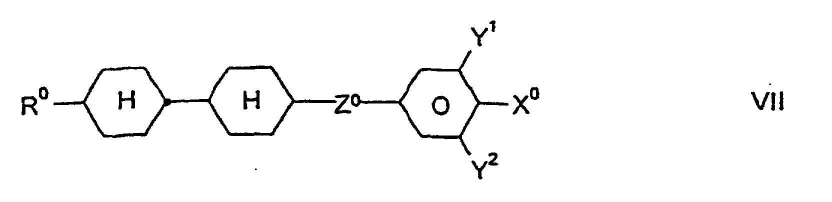 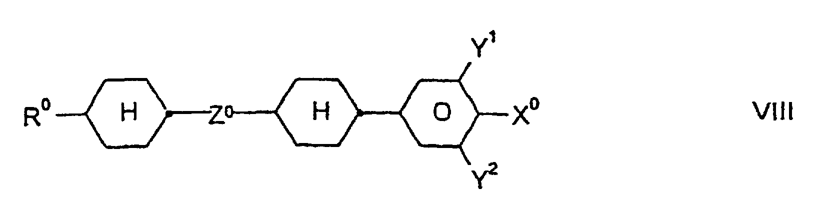 in which the individual radicals have the following meanings:
R⁰: n-alkyl, oxaalkyl, fluoroalkyl or alkenyl, each having up to 7 C atoms,
X⁰: F, Cl, halogenated alkyl, alkenyl or alkoxy having 1 to 6 C atoms,
Z⁰: -C₄H₈-, -CF₂O-, -OCF₂-, -C₂F₄-, -CH₂O-, -OCH₂- or -COO-,
Y¹, Y², Y³ and Y⁴: each, independently of one another, H or F,
r: 0 or 1.

3. Medium according to Claim 2, **characterised in that** the proportion of compounds of the formulae I to VIII together in the mixture as a whole is at least 50% by weight.

4. Medium according to Claim 1 or 2, **characterised in that** the proportion of compounds of the formula I in the mixture as a whole is 5 to 50% by weight.

5. Medium according to at least one of Claims 2 to 3, **characterised in that** the proportion of compounds of the formulae II to VIII in the mixture as a whole is 20 to 80% by weight.

6. Medium according to Claim 1, **characterised in that** it additionally comprises one or more compounds of the formula 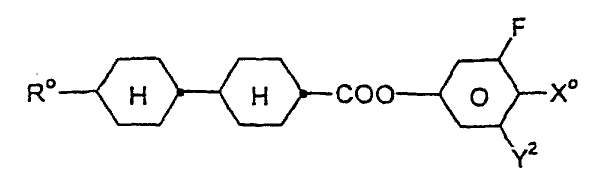 in which R⁰, X⁰ and Y² have the meaning indicated in Claim 2.

7. Medium according to Claim 2 or Claim 6, **characterised in that** X⁰ denotes F or OCF³ and Y² denotes H or F.

8. Medium according to one of Claims 1 to 7, **characterised in that** Y in the compound of the formula I denotes OCF₃ or CF₃.

9. Medium according to one of Claims 1 to 8, **characterised in that** the compound of the formula I is selected from the group of compounds la to In: 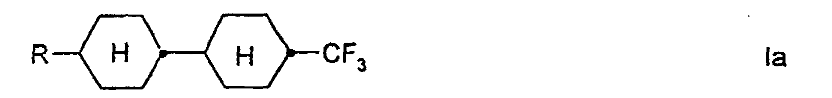 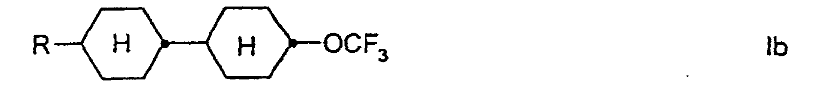 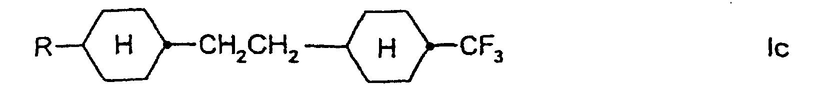 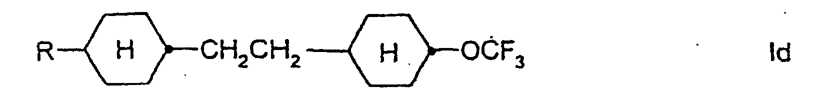 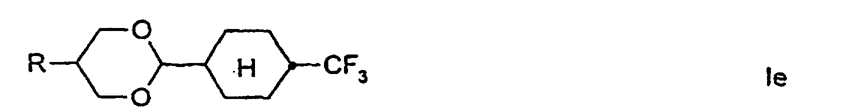 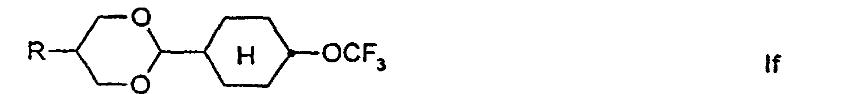 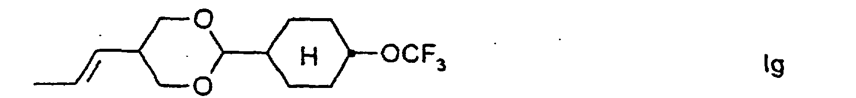 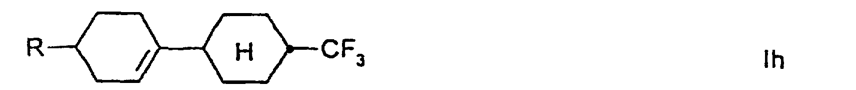 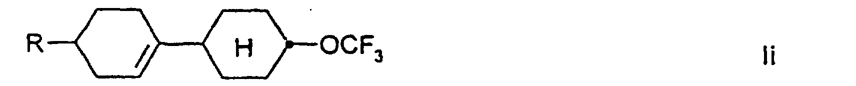 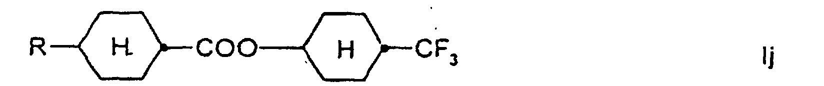 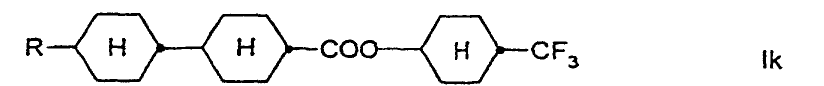 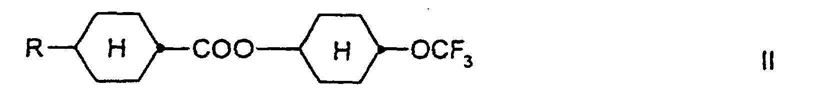 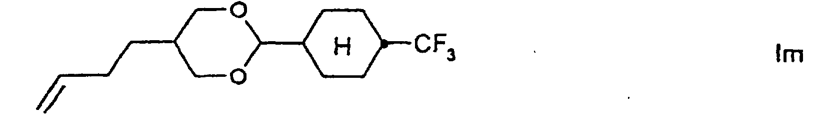 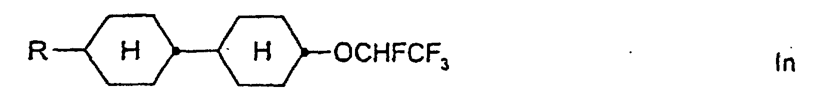 in which R has the meaning indicated in Claim 1.

10. Use of the liquid-crystalline medium according to Claim 1 for electro-optical purposes.

11. Electro-optical liquid-crystal display containing a liquid-crystalline medium according to Claim 1.

## Revendications

1. Milieu de cristaux liquides basé sur un mélange de composés polaires présentant une anisotropie diélectrique positive et une anisotropie optique ≤0,07, **caractérisé en ce qu'**il comprend un ou plusieurs composés de la formule générale 1 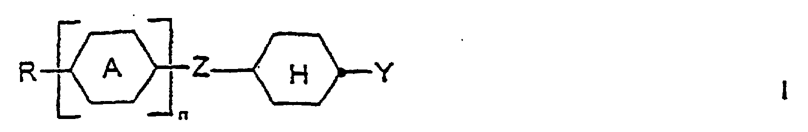 et un ou plusieurs composés ester des formules E1 à E4 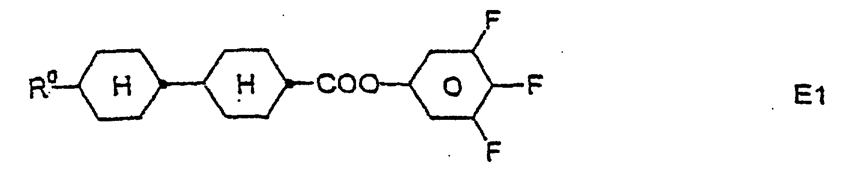 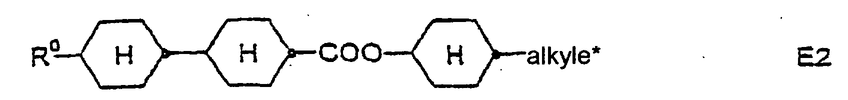 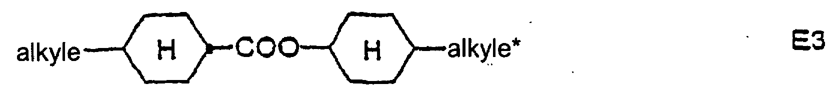 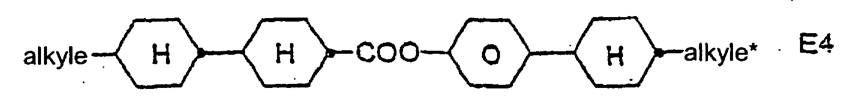 dans lesquelles
R représente H, un radical alkyle ou alkényle comportant 1 à 15 atomes C qui est non substitué, monosubstitué par CN ou CF₃ ou au moins monosubstitué par halogène, où, en plus, un ou plusieurs groupes CH₂ dans ces radicaux peuvent chacun, indépendamment les uns des autres, être remplacés par -O-, -S-, 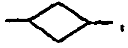 -CO-, -CO-O-, -O-CO- ou -O-CO-O- de telle sorte que des atomes O ne soient pas liés directement les uns aux autres, 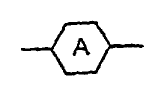
représente un anneau trans-1,4-cyclohexylène, où, en plus, un ou deux groupes CH₂ peuvent être remplacés par -O- et/ou -S-, ou un anneau cyclohexénylène,
Y représente alkyle halogéné, alkényle halogéné, alkoxy halogéné ou alkényloxy halogéné comportant jusqu'à 6 atomes C,
Z représente -CH₂O-, -OCH₂-, -CH₂CH₂-, -CH=CH-, - CF₂O-, -OCF₂-, -COO-, -C₂F₄- ou une liaison simple, et
n représente 1 ou 2
R⁰ représente n-alkyle, oxaalkyle, fluoroalkyle ou alkényle, chacun comportant jusqu'à 7 atomes C,
alkyle représente une chaîne droite ou des chaînes alkyle dérivées comportant 1 à 7 atomes C,
alkyle^{*} représente une chaîne droite ou des chaînes alkyle dérivées comportant 1 à 7 atomes C.

2. Milieu selon la revendication 1, **caractérisé en ce qu'**il comprend de façon additionnelle un ou plusieurs composés choisis parmi le groupe constitué par les formules générales II à VIII: 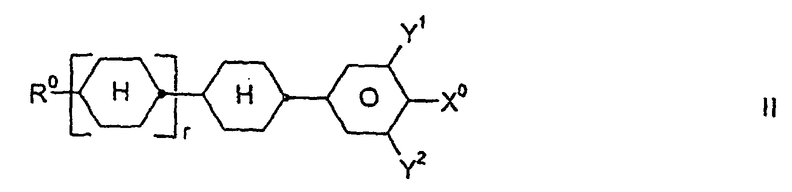 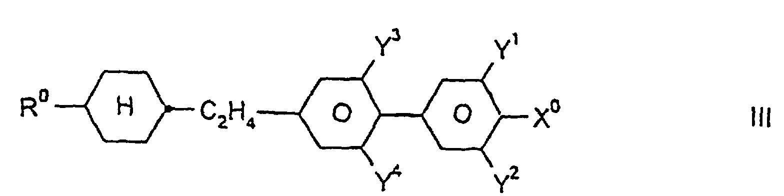 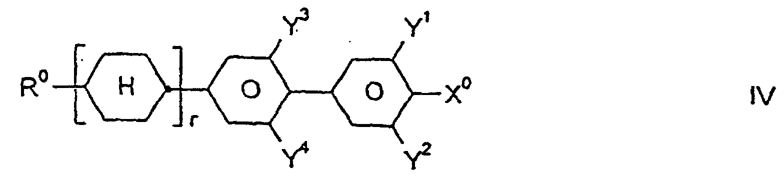 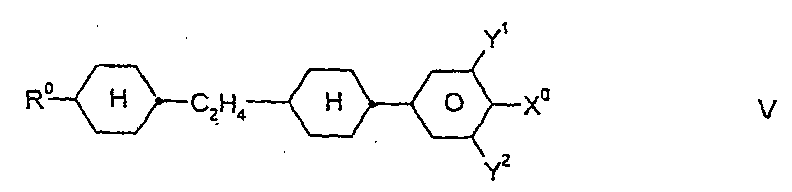 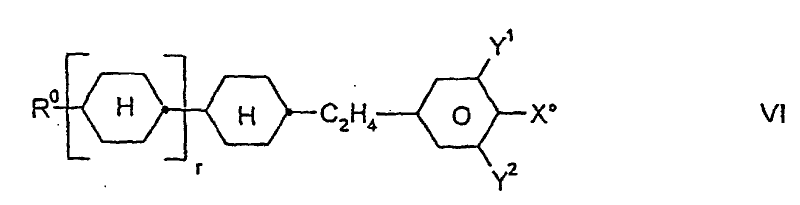 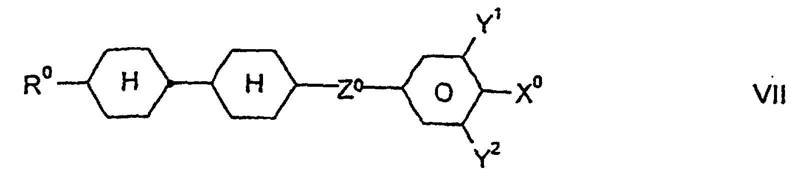 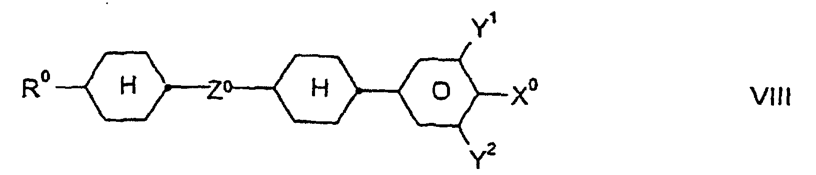 dans lesquelles les radicaux individuels présentent les significations qui suivent:
R⁰: n-alkyle, oxaalkyle, fluoroalkyle ou alkényle, chacun comportant jusqu'à 7 atomes C,
X⁰: F, CI, alkyle, alkényle ou alkoxy halogéné comportant 1 à 6 atomes C,
Z⁰: -C₄H₈-, -CF₂O-, -OCF₂-, -C₂F₄-, -CH₂O-, -OCH₂- ou -COO-,
Y¹, Y², Y³ et Y⁴: chacun, indépendamment des autres, H ou F,
r: 0 ou 1.

3. Milieu selon la revendication 2, **caractérisé en ce que** la proportion de composés des formules I à VIII ensemble dans le mélange de façon globale est d'au moins 50% en poids.

4. Milieu selon la revendication 1 ou 2, **caractérisé en ce que** la proportion de composés de la formule I dans le mélange de façon globale est de 5 à 50% en poids.

5. Milieu selon au moins l'une des revendications 2 à 3, **caractérisé en ce que** la proportion de composés des formules II à VIII dans le mélange de façon globale est de 20 à 80% en poids.

6. Milieu selon la revendication 1, **caractérisé en ce qu'**il comprend additionnellement un ou plusieurs composés de la formule 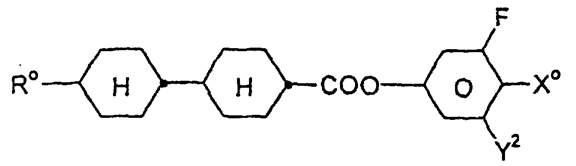 dans laquelle R⁰, X⁰ et Y² présentent la signification indiquée dans la revendication 2.

7. Milieu selon la revendication 2 ou la revendication 6, **caractérisé en ce que** X⁰ représente F ou OCF₃ et Y² représente H ou F.

8. Milieu selon l'une des revendications 1 à 7, **caractérisé en ce que** Y dans le composé de la formule I représente OCF₃ ou CF₃.

9. Milieu selon l'une des revendications 1 à 8, **caractérisé en ce que** le composé de la formule I est sélectionné parmi le groupe de composés la à In: 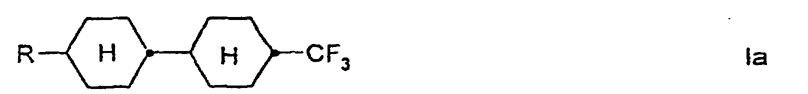 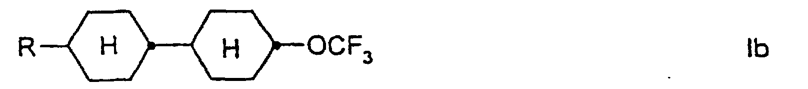 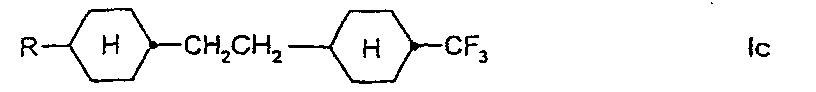 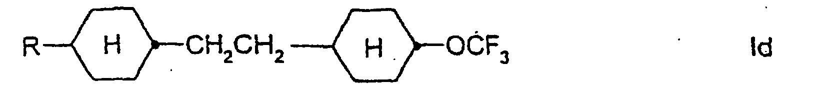 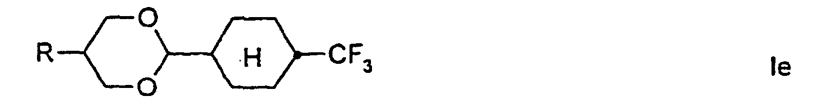 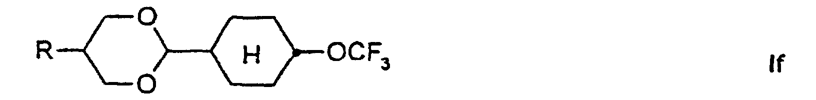 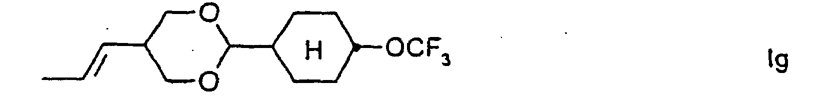 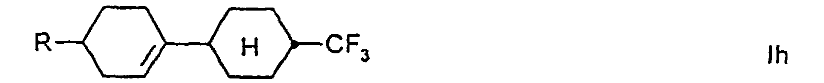 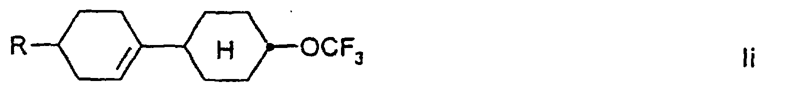 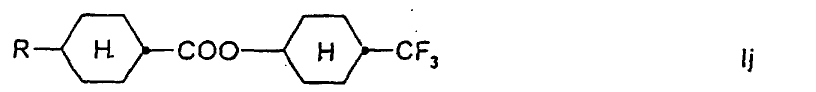 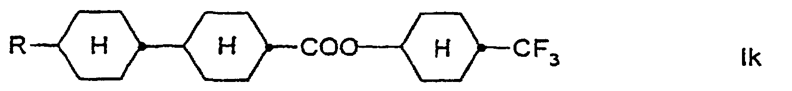 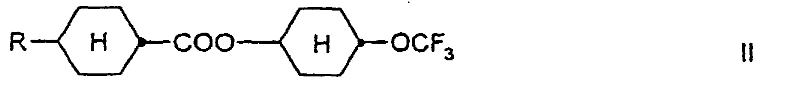 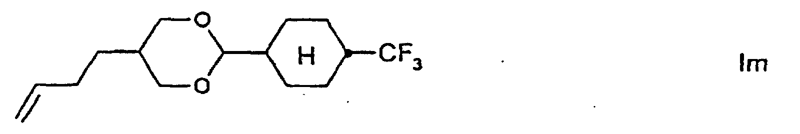 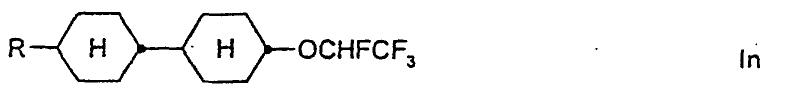 dans lesquelles R présente la signification indiquée dans la revendication 1.

10. Utilisation d'un milieu de cristaux liquides selon la revendication 1 à des fins électro-optiques.

11. Affichage électro-optique à cristaux liquides contenant un milieu de cristaux liquides selon la revendication 1.
